# EUROPEAN PATENT SPECIFICATION

(11) **EP 3 734 438 B1**
(45) Date of publication and mention of the grant of the patent: **16.11.2022**
(21) Application number: 20181833.3
(22) Date of filing: 30.03.2012
(51) Int. Cl.: G06F 3/0488, G06F 3/0482, G06F 3/0354, G06F 1/16, G06F 3/14, H04M 1/72415

(54) **MOBILE TERMINAL PERFORMING REMOTE CONTROL FUNCTION FOR A DISPLAY DEVICE**
MOBILES ENDGERÄT ZUR DURCHFÜHRUNG EINER FERNSTEUERUNGSFUNKTION FÜR EINE ANZEIGEVORRICHTUNG
TERMINAL MOBILE METTANT EN UVRE UNE FONCTION DE COMMANDE À DISTANCE POUR UN DISPOSITIF D'AFFICHAGE

(30) Priority: 12.04.2011 KR 20110033719
(43) Date of publication of application: 04.11.2020
(62) Divisional of application: 12162561.0
(73) Proprietor: LG Electronics Inc., Yeongdeungpo-gu Seoul 07336 (KR)
(72) Inventor: KO, Youngseok, 153-801 Seoul (KR); YOU, Soolim, 153-801 Seoul (KR); NAM, Kihoa, 153-801 Seoul (KR)
(74) Representative: Ter Meer Steinmeister & Partner

(56) References cited:
- US-A1- 2009 153 288
- US-A1- 2010 081 375

## Description

This application claims priority of KR No. 10-2011-0033719 filed on April 12, 2011.

### BACKGROUND

### Field

The present invention relates to a mobile terminal and, more particularly, to a mobile terminal capable of performing a remote control function for a display device.

### Related Art

US 2010/081375 A1 describes a method for controlling a variety of electronic devices using another single electronic device, including receiving control information associated with a controllable electronic device via near field communication, determining a control scheme for controlling the controllable electronic device based on the control information, and controlling the controllable electronic device using the determined control scheme. The controlled electronic devices may include media-playing devices, video game systems, consumer electronic devices, software on a computer system such as a web browser, video projectors, home utility devices, and digital cameras. In an example, a control software plug-in of the controlling device includes a control scheme for controlling a television that provides the same functionality found in a remote control associated with the television.

US 2009/153288 A1 relates to handheld electronic devices that may recognize gestures performed by a user on the touch sensitive display screen. The handheld electronic devices may generate remote control signals from gestures that the handheld electronic device may recognize. A media system may receive the remote control signals and may take appropriate action.

As the function of a terminal, such as a personal computer, a notebook, a mobile phone, and a smart phone, is diversified, the terminal is being implemented into a multimedia player equipped with complex functions, such as taking a photograph or capturing a moving image, playing music or a moving image file, playing a game, and receiving broadcasting.

In order to support and enhance the functions of the terminal, the improvement of a structural part or a software part or both of the terminal may be taken into consideration. As a variety of terminals including a mobile terminal are recently providing complex and various functions, a menu structure becomes complicated.

### Summary

The invention is defined by independent claims 1 and 12. Further embodiments are defined by the dependent claims. In the following detailed description a number of embodiments and examples will be discussed to provide a full understanding of the invention. Embodiments and examples not covered by the claims are to be interpreted as not forming part of the invention.

### Brief Description of the Drawings

The accompany drawings, which are included to provide a further understanding of this document and are incorporated on and constitute a part of this specification illustrate embodiments of this document and together with the description serve to explain the principles of this document.
FIG. 1 is a block diagram of a mobile terminal acc. to an embodiment of the present invention;
FIG. 2 shows a state where the mobile terminal is operated by a remote controller for a display device according to an embodiment of the present invention;
FIG. 3 shows a state where a remote control application for smart TV has been executed in the mobile terminal according to an embodiment of the present invention;
FIG. 4 is a flowchart illustrating a method of the mobile terminal controlling the display device according to an embodiment of the present invention;
FIGS. 5 to 6 show states in which a user selects a specific region of the display device by using a cursor in the mobile terminal according to an embodiment of the present invention;
FIG. 7 shows another example where a user selects a specific region of the display device by using the cursor in the mobile terminal according to an embodiment of the present invention;
FIG. 8 is a flowchart illustrating a method of the mobile terminal controlling the display device according to another embodiment of the present invention;
FIG. 9 is a flowchart illustrating an example of the method of the mobile terminal controlling the display device shown in FIG. 8;
FIGS. 10 to 12 show processes in which a message writing application for transmitting the URL of a web TV channel, received from smart TV 200, to another electronic device according to the method of the mobile terminal controlling the display device shown in FIG. 9;
FIG. 13 shows a state where an SNS application for transmitting the URL of a web TV channel, received from the smart TV shown in FIG. 10, from the mobile terminal 100 to another electronic device has been executed according to the present invention;
FIGS. 14 to 17 show examples where the mobile terminal receives information related to a specific region from the display device according to the present invention;
FIG. 18 is a flowchart illustrating another example of the method of the mobile terminal controlling the display device shown in FIG. 8;
FIG. 19 shows an example where the method of the mobile terminal controlling the display device shown in FIG. 18 is performed;
FIG. 20 shows another example where the method of the mobile terminal controlling the display device shown in FIG. 18 is performed;
FIGS. 21 to 22 show yet another example where the method of the mobile terminal controlling the display device shown in FIG. 18 is performed;
FIG. 23 is a flowchart illustrating yet another example of the method of the mobile terminal controlling the display device shown in FIG. 8;
FIG. 24 shows an example where the method of the mobile terminal controlling the display device shown in FIG. 23 is performed;
FIG. 25 shows another example where the method of the mobile terminal controlling the display device shown in FIG. 23 is performed;
FIG. 26 is a flowchart illustrating further yet another example of the method of the mobile terminal controlling the display device shown in FIG. 8;
FIGS. 27 and 28 show examples where the method of the mobile terminal controlling the display device shown in FIG. 26 is performed;
FIG. 29 shows another example where the method of the mobile terminal controlling the display device shown in FIG. 26 is performed;
FIG. 30 is a flowchart illustrating still yet another example of the method of the mobile terminal controlling the display device shown in FIG. 8;
FIG. 31 shows an example where the method of the mobile terminal controlling the display device shown in FIG. 30 has been performed;
FIG. 32 shows another example where the method of the mobile terminal controlling the display device shown in FIG. 30 has been performed;
FIG. 33 is a flowchart illustrating further still another example of the method of the mobile terminal controlling the display device shown in FIG. 8;
FIG. 34 shows an example where the method of the mobile terminal controlling the display device shown in FIG. 33 is performed;
FIG. 35 shows another example where the method of the mobile terminal controlling the display device shown in FIG. 33 is performed;
FIG. 36 shows yet another example where the method of the mobile terminal controlling the display device shown in FIG. 33 is performed;
FIG. 37 is a flowchart illustrating still yet another example of the method of the mobile terminal controlling the display device shown in FIG. 8;
FIG. 38 shows an example where a specific region is selected in order to receive configuration setting information about the display device of the method of controlling the display device of FIG.37;
FIGS. 39 and 40 show processes in which the operating environment of the display device is set on an application basis according to the method of controlling the display device shown in FIG. 38;
FIG. 41 is a flowchart illustrating a method of the mobile terminal controlling the display device according to yet another embodiment of the present invention;
FIGS. 42 and 43 show examples of a process in which the method of the mobile terminal controlling the display device shown in FIG. 41 is performed;
FIGS. 44 and 45 show another example of a process in which the method of the mobile terminal controlling the display device 200 shown in FIG. 41 is performed;
FIG. 46 is a flowchart illustrating a method of the mobile terminal controlling the display device according to still yet another embodiment of the present invention;
FIGS. 47 to 51 show states in which information related to an event generated in the mobile terminal has been displayed in the display device according to the method of the mobile terminal controlling the display device shown in FIG. 46;
FIG. 52 is a flowchart illustrating an example of the method of the mobile terminal controlling the display device shown in FIG. 46;
FIG. 53 shows a state where the execution screen of a response message writing application and a keypad have been displayed in the display device according to the method of the mobile terminal controlling the display device shown in FIG. 52;
FIG. 54 is a flowchart illustrating another example of the method of the mobile terminal controlling the display device shown in FIG. 46;
FIG. 55 shows a state where a telephone call is interfaced by the display device according to the method of the mobile terminal controlling the display device shown in FIG. 54;
FIG. 56 is a flowchart illustrating a method of the mobile terminal controlling the display device according to still yet another embodiment of the present invention;
FIGs. 57 to 59 show examples where specific information transmitted by the mobile terminal is applied to an application selected in the display device according to the method of the mobile terminal controlling the display device shown in FIG. 56;
FIG. 60 shows an example where information is transmitted from one display device to a plurality of mobile terminals; and
FIG. 61 shows another example where information is transmitted from one display device to a plurality of mobile terminals.

### Detailed Description of the Embodiments

The present invention will now be described more fully with reference to the accompanying drawings, in which exemplary embodiments of the invention are shown. The invention may, however, be embodied in many different forms and should not be construed as being limited to the embodiments set forth herein; rather, there embodiments are provided so that this disclosure will be thorough and complete, and will fully convey the concept of the invention to those skilled in the art.

Hereinafter, a mobile terminal relating to the present invention will be described below in more detail with reference to the accompanying drawings. In the following description, suffixes "module" and "unit" are given to components of the mobile terminal in consideration of only facilitation of description and do not have meanings or functions discriminated from each other.

The mobile terminal described in the specification can include a cellular phone, a smart phone, a laptop computer, a digital broadcasting terminal, personal digital assistants (PDA), a portable multimedia player (PMP), a navigation system and so on.

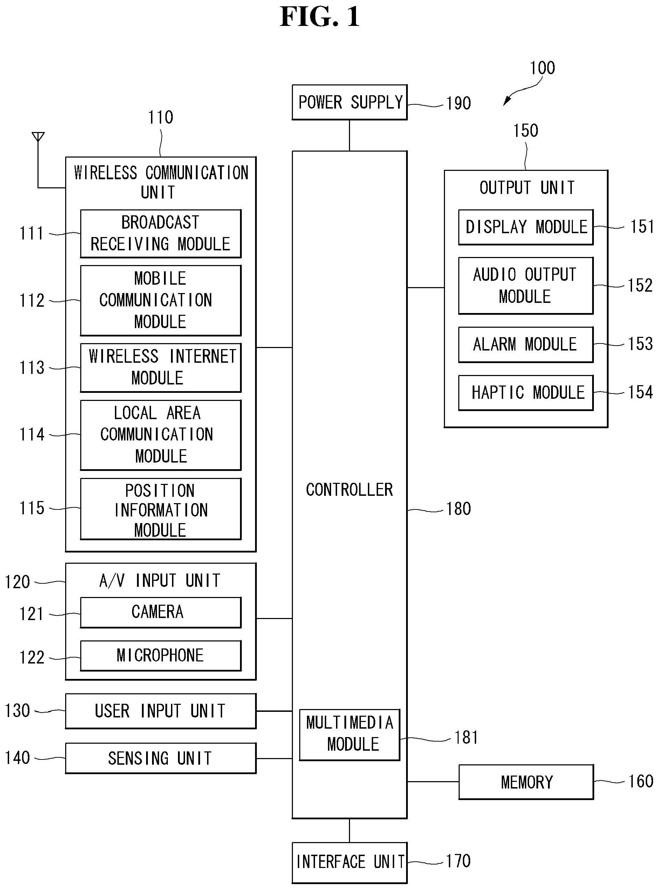

FIG. 1 is a block diagram of an implementation of a mobile terminal 100. The mobile terminal 100 includes a wireless communication unit 110, a controller 180, and a display unit 151. The mobile terminal 100 can also include an audio/video (A/V) input unit 120, a user input unit 130, a sensing unit 140, an output unit 150, a memory 160, an interface 170, and a power supply 190. The components shown in FIG. 1 are not essential parts and the number of components included in the mobile terminal can be varied.

The components of the mobile terminal will now be described.

The wireless communication unit 110 can include at least one module that enables radio communication between the mobile terminal 100 and a radio communication system or between the mobile terminal 100 and a network in which the mobile terminal 100 is located. For example, the wireless communication unit 110 can include a broadcasting receiving module 111, a mobile communication module 112, a wireless Internet module 113, a local area communication module 114 and a position information module 115.

The broadcasting receiving module 111 receives broadcasting signals and/or broadcasting related information from an external broadcasting management server through a broadcasting channel.

The broadcasting channel can include a satellite channel and a terrestrial channel. The broadcasting management server can be a server that generates and transmits broadcasting signals and/or broadcasting related information or a server that receives previously created broadcasting signals and/or broadcasting related information and transmits the broadcasting signals and/or broadcasting related information to a terminal. The broadcasting signals can include not only TV broadcasting signals, radio broadcasting signals and data broadcasting signals but also signals in the form of combination of a TV broadcasting signal and a radio broadcasting signal.

The broadcasting related information can be information on a broadcasting channel, a broadcasting program or a broadcasting service provider. The broadcasting related information can be provided even through a mobile communication network. In this case, the broadcasting related information can be received by the mobile communication module 112.

The broadcasting related information can exist in various forms. For example, the broadcasting related information can exist in the form of electronic program guide (EPG) of digital multimedia broadcasting (DMB) or in the form of electronic service guide (ESG) of digital video broadcast-handheld (DVB-H).

The broadcasting receiving module 111 receives broadcasting signals using various broadcasting systems. Particularly, the broadcasting receiving module 111 can receive digital broadcasting signals using digital broadcasting systems such as digital multimedia broadcasting-terrestrial (DMB-T), digital multimedia broadcasting-satellite (DMB-S), media forward link only (MediaFLO), DVB-H and integrated services digital broadcast-terrestrial (ISDB-T) systems. The broadcasting receiving module 111 can be constructed to be suited to broadcasting systems providing broadcasting signals other than the above-described digital broadcasting systems.

The broadcasting signals and/or broadcasting related information received through the broadcasting receiving module 111 can be stored in the memory 160. The mobile communication module 112 transmits/receives a radio signal to/from at least one of a base station, an external terminal and a server on a mobile communication network. The radio signal can include a voice call signal, a video telephony call signal or data in various forms according to transmission and receiving of text/multimedia messages.

The wireless Internet module 113 means a module for wireless Internet access and can be included in the mobile terminal 100 or externally attached to the mobile terminal 100. Wireless LAN (WLAN) (Wi-Fi), wireless broadband (Wibro), world interoperability for microwave access (Wimax), high speed downlink packet access (HSDPA) and so on can be used as a wireless Internet technique.

The local area communication module 114 means a module for local area communication. Bluetooth, radio frequency identification (RFID), infrared data association (IrDA), ultra wideband (UWB) and ZigBee can be used as a local area communication technique.

The position information module 115 confirms or obtains the position of the mobile terminal. A global positioning system (GPS) module is a representative example of the position information module 115. According to the current technology, the GPS module 115 can calculate information on distances between one point (object) and at least three satellites and information on the time when the distance information is measured and apply trigonometry to the obtained distance information to obtain three-dimensional position information on the point (object) according to latitude, longitude and altitude at a predetermined time.

Furthermore, a method of calculating position and time information using three satellites and correcting the calculated position and time information using another satellite is also used. In addition, the GPS module 115 continuously calculates the current position in real time and calculates velocity information using the position information.

Referring to FIG. 1, the A/V input unit 120 is used to input an audio signal or a video signal and can include a camera 121 and a microphone 122. The camera 121 processes image frames of still images or moving images obtained by an image sensor in a video telephony mode or a photographing mode. The processed image frames can be displayed on a display unit 151.

The image frames processed by the camera 121 can be stored in the memory 160 or transmitted to an external device through the wireless communication unit 110. The mobile terminal 100 can include at least two cameras according to constitution of the terminal.

The microphone 122 receives an external audio signal in a call mode, a recording mode or a speed recognition mode and processes the received audio signal into electric audio data. The audio data can be converted into a form that can be transmitted to a mobile communication base station through the mobile communication module 112 and output in the call mode. The microphone 122 can employ various noise removal algorithms for removing noise generated when the external audio signal is received.

The user input unit 130 receives input data for controlling the operation of the terminal from a user. The user input unit 130 can include a keypad, a dome switch, a touch pad (constant voltage/capacitance), jog wheel, jog switch and so on.

The sensing unit 140 senses the current state of the mobile terminal 100, such as open/close state of the mobile terminal 100, the position of the mobile terminal 100, whether a user touches the mobile terminal 100, the direction of the mobile terminal 100 and acceleration/deceleration of the mobile terminal 100 and generates a sensing signal for controlling the operation of the mobile terminal 100. For example, the sensing unit 140 can sense whether a slide phone is opened or closed when the mobile terminal 100 is the slide phone. Furthermore, the sensing unit 140 can sense whether the power supply 190 supplies power and whether the interface 170 is connected to an external device. The sensing unit 140 can include a proximity sensor.

The output unit 150 generates visual, auditory or tactile output and can include the display unit 151, an audio output module 152, an alarm module 153 and a haptic module 154.

The display unit 151 displays information processed by the mobile terminal 100. For example, the display unit 151 displays UI or graphic user interface (GUI) related to a telephone call when the mobile terminal is in the call mode. The display unit 151 displays a captured or/and received image, UI or GUI when the mobile terminal 100 is in the video telephony mode or the photographing mode.

The display unit 151 can include at least one of a liquid crystal display, a thin film transistor liquid crystal display, an organic light-emitting diode display, a flexible display and a three-dimensional display.

Some of these displays can be of a transparent type or a light transmission type. This can be referred to as a transparent display. The transparent display includes a transparent liquid crystal display. The rear structure of the display unit 151 can also be of the light transmission type. According to this structure, a user can see an object located behind the body of the mobile terminal 100 through an area of the body of the mobile terminal 100, which is occupied by the display unit 151.

The mobile terminal 100 can include at least two display unit 151 according to constitution of the terminal. For example, the mobile terminal 100 can include a plurality of displays that are arranged on a single face at a predetermined distance or integrated. Otherwise, the plurality of displays can be arranged on different sides.

In the case where the display unit 151 and a sensor sensing touch (referred to as a touch sensor hereinafter) form a layered structure, which is referred to as a touch screen hereinafter, the display unit 151 can be used as an input device in addition to an output device. The touch sensor can be in the form of a touch film, a touch sheet and a touch pad, for example.

The touch sensor can be constructed such that it converts a variation in pressure applied to a specific portion of the display unit 151 or a variation in capacitance generated at a specific portion of the display unit 151 into an electric input signal. The touch sensor can be constructed such that it can sense pressure of touch as well as the position and area of touch.

When touch input is applied to the touch sensor, a signal corresponding to the touch input is transmitted to a touch controller. The touch controller processes the signal and transmits data corresponding to the processed signal to the controller 180. Accordingly, the controller 180 can detect a touched portion of the display 151.

A proximity sensor can be located in an internal region of the mobile terminal which is illustrated in FIG. 1, surrounded by the touch screen, or near the touch screen. The proximity sensor senses an object approaching a predetermined sensing face or an object located near the proximity sensor using electromagnetic force or infrared rays without having mechanical contact. The proximity sensor has lifetime longer than that of a contact sensor and has wide application.

The proximity sensor includes a transmission type photo-electric sensor, a direct reflection type photo-electric sensor, a mirror reflection type photo-electric sensor, a high-frequency oscillating proximity sensor, a capacitive proximity sensor, a magnetic proximity sensor, an infrared proximity sensor, etc.

A capacitive touch screen is constructed such that proximity of a pointer is detected through a variation in an electric field according to the proximity of the pointer. In this case, the touch screen (touch sensor) can be classified as a proximity sensor.

For convenience of explanation, an action of approaching the pointer to the touch screen while the pointer it not being in contact with the touch screen such that location of the pointer on the touch screen is recognized is referred to as "proximity touch" and an action of bring the pointer into contact with the touch screen is referred to as "contact touch" in the following description. A proximity touch point of the pointer on the touch screen means a point of the touch screen to which the pointer corresponds perpendicularly to the touch screen when the pointer proximity-touches the touch screen.

The proximity sensor senses proximity touch and a proximity touch pattern (for example, a proximity touch distance, a proximity touch direction, a proximity touch velocity, a proximity touch time, a proximity touch position, a proximity touch moving state, etc.). Information corresponding to the sensed proximity touch action and proximity touch pattern can be displayed on the touch screen.

The audio output module 152 can output audio data received from the wireless communication unit 110 or stored in the memory 160 in a call signal receiving mode, a telephone call mode or a recording mode, a speech recognition mode and a broadcasting receiving mode. The audio output module 152 outputs audio signals related to functions (for example, a call signal incoming tone, a message incoming tone, etc.) performed in the mobile terminal 100. The audio output module 152 can include a receiver, a speaker, a buzzer, etc.

The alarm module 153 outputs a signal for indicating generation of an event of the mobile terminal 100. Examples of events generated in the mobile terminal include receiving of a call signal, receiving of a message, input of a key signal, input of touch, etc. The alarm module 153 can output signals in forms different from video signals or audio signals, for example, a signal for indicating generation of an event through vibration. The video signals or the audio signals can be also output through the display unit 151 or the audio output module 152.

The haptic module 154 generates various haptic effects that the user can feel. A representative example of the haptic effects is vibration. The intensity and pattern of vibration generated by the haptic module 154 can be controlled. For example, different vibrations can be combined and output or sequentially output.

The haptic module 154 can generate a variety of haptic effects including an effect of stimulus according to arrangement of pins vertically moving for a contact skin face, an effect of stimulus according to jet force or sucking force of air through a jet hole or a sucking hole, an effect of stimulus rubbing the skin, an effect of stimulus according to contact of an electrode, an effect of stimulus using electrostatic force and an effect according to reproduction of cold and warmth using an element capable of absorbing or radiating heat in addition to vibrations.

The haptic module 154 can not only transmit haptic effects through direct contact but also allow the user to feel haptic effects through kinesthetic sense of his fingers or arms. The mobile terminal 100 can include at least two haptic modules 154 according to constitution of the mobile terminal.

The memory 160 can store a program for the operation of the controller 180 and temporarily store input/output data (for example, phone book, messages, still images, moving images, etc.). The memory 160 can store data about vibrations and sounds in various patterns, which are output from when a touch input is applied to the touch screen.

The memory 160 can include at least one of a flash memory, a hard disk type memory, a multimedia card micro type memory, a card type memory (for example, SD or XD memory), a random access memory (RAM), a static RAM (SRAM), a read-only memory (ROM), an electrically erasable programmable ROM (EEPROM), a programmable ROM (PROM) magnetic memory, a magnetic disk and an optical disk. The mobile terminal 100 can operate in relation to a web storage performing the storing function of the memory 160 on the Internet.

The interface 170 serves as a path to all external devices connected to the mobile terminal 100. The interface 170 receives data from the external devices or power and transmits the data or power to the internal components of the mobile terminal 100 or transmits data of the mobile terminal 100 to the external devices.

The interface 170 can include a wired/wireless headset port, an external charger port, a wired/wireless data port, a memory card port, a port for connecting a device having a user identification module, an audio I/O port, a video I/O port, an earphone port, etc., for example.

An identification module is a chip that stores information for authenticating the authority to use the mobile terminal 100 and can include a user identify module (UIM), a subscriber identify module (SIM) and a universal subscriber identify module (USIM). A device (referred to as an identification device hereinafter) including the identification module can be manufactured in the form of a smart card. Accordingly, the identification device can be connected to the mobile terminal 100 through a card slot included in the interface 170.

The construction of the mobile terminal 100 according to the present invention has been described above with reference to FIG. 1. Hereinafter, characteristics of the mobile terminal 100 capable of controlling the display device will be described in more detail.

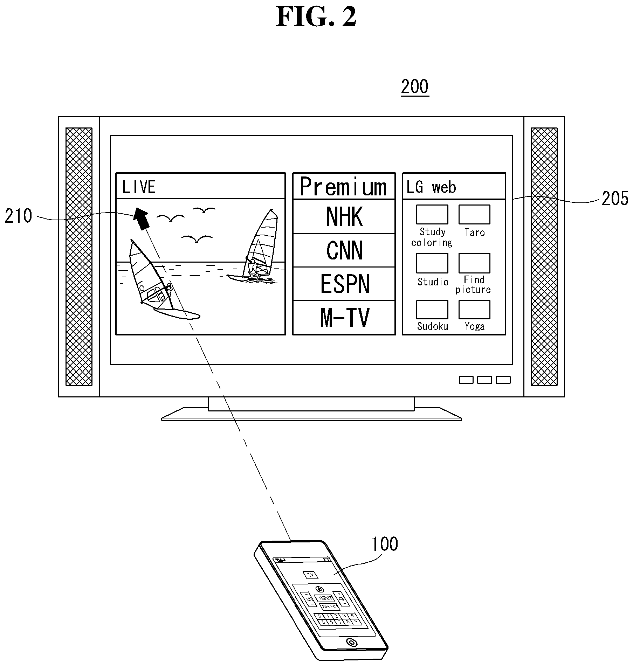

FIG. 2 shows a state where the mobile terminal 100 is operated by a remote controller for the display device 200 according to an embodiment of the present invention. The display device that may be controlled by the mobile terminal 100 may be smart TV, such as that shown in FIG. 2, or may be a personal computer, a notebook, another mobile terminal or the like, but the scope of the present invention is not limited thereto. The characteristics of the mobile terminal 100 are described below with reference to relevant drawings.

When a remote control application mounted on the mobile terminal 100 is executed, the controller 180 of the mobile terminal 100 sets up a wireless network with the display device 200 by using the wireless communication unit 110. Bluetooth, Radio Frequency Identification (RFID), infrared Data Association (IrDA), Ultra Wideband (UWZ), ZigBee, etc. which are near-field wireless communication technologies may be used as the wireless communication with the display device 200, but the scope of the present invention is not limited thereto.

When the wireless network with the display device 200 is set up, the controller 180 controls the operation of the display device 200 based on user's manipulation through the remote control application. When a remote control function is activated in the mobile terminal 100, a cursor 210 tracking the motion of the mobile terminal 100 is displayed in the screen 205 of the display device 200. A user controls the display device 200 by using the cursor 210.

The motion of the mobile terminal 100 may be sensed by a gyro sensor, an acceleration sensor or the like which is included in the sensing unit 140 of the mobile terminal 100. For example, the gyro sensor may sense a motion on the space of the mobile terminal 100, and the acceleration sensor may sense the moving speed of the mobile terminal 100, etc.

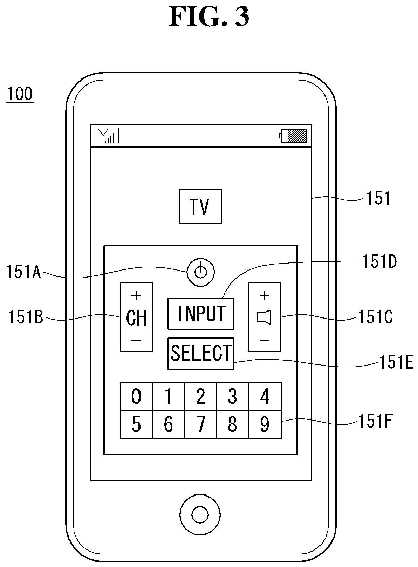

FIG. 3 shows a state where the remote control application for smart TV has been executed in the mobile terminal 100 according to an embodiment of the present invention. For reference, a remote control application execution screen for smart TV shown in FIG. 3 is the execution screen of the remote control application for a web TV application which is mounted on the smart TV.

Referring to FIG. 3, when the remote control application for smart TV is executed in the mobile terminal 100, various buttons for controlling the operation of the smart TV, such as a power button 151A, a channel control button 151B, a volume control button 151C, an input button 151D, a select button 151E, and a number pad 151F, may be displayed in the display unit 151 of the mobile terminal 100.

If an application executed in the smart TV is changed, it is preferred that the construction of the execution screen of the remote control application displayed in the display unit 151 of the mobile terminal 100 be changed. Furthermore, a plurality of remote control applications for respective applications may be mounted on the mobile terminal 100. This is because the applications may have different objects and functions.

The mobile terminal 100 according to the embodiment of the present invention may perform not only a basic remote control function, but also a variety of additional functions by using information that is transmitted and received through wireless communication with the display device 200.

For example, when a specific region of the screen of the display device 200 is selected by the cursor displayed in the display device 200, the mobile terminal 100 may receive information related to the specific region from the display device 200 or transmit specific information to the display device 200 by using the specific region as an interface window.

When information related to the specific region is received, the mobile terminal 100 may execute a specific application pertinent to the information related to the specific region. Here, the specific application pertinent to the information related to the specific region may be previously set. For example, if the information related to the specific region is the Uniform Resource Locator (URL) of a specific web page which is being executed in the display device 200, the mobile terminal 100 may execute a web browsing application which is an application that has been previously set for a specific web page URL.

Furthermore, when information related to the specific region is received in the state where a specific application is being executed or has been selected for execution in the mobile terminal 100, the mobile terminal 100 may execute the specific application by using the information related to the specific region. For example, when information "URL of a specific web page" related to the specific region is received in the state where an icon of a web browsing application has been selected in the mobile terminal 100, the mobile terminal 100 may execute the web browsing application and then access the URL of the specific web page.

Furthermore, when a predetermined event is generated in the state where the remote control function for the display device 200 has been activated, the mobile terminal 100 may control the display device 200 so that information related to the generated event is displayed. For example, when an incoming call event is generated in the mobile terminal 100 in the state where the remote control function for the display device 200 has been activated, the mobile terminal 100 may control the display device 200 so that a message informing the incoming call is displayed. The predetermined event may include the incoming call event, the message reception event, etc., and the message may include Short Message Service (SMS), Multimedia Message Service (MMS), e-mail and so on.

Furthermore, the mobile terminal 100 may control the display device 200 by transmitting specific information to the display device 200 so that the specific information is applied to an application being executed in the display device 200 or an application selected for execution. For example, the mobile terminal 100 may control the display device 200 by transmitting an execution command and specific information to the display device 200 in the state where a specific application has been selected by the cursor so that the specific application is executed and, at the same time, the specific information is applied to the executed specific application.

A more detailed example is described below. When the mobile terminal 100 transmits the URL of a specific web page in the state where a web browsing application is being executed in the display device 200, the display device 200 may access the specific web page by executing the web browsing application.

The characteristics of the mobile terminal 100 according to the embodiment of the present invention are described in more detail below with reference to relevant drawings.

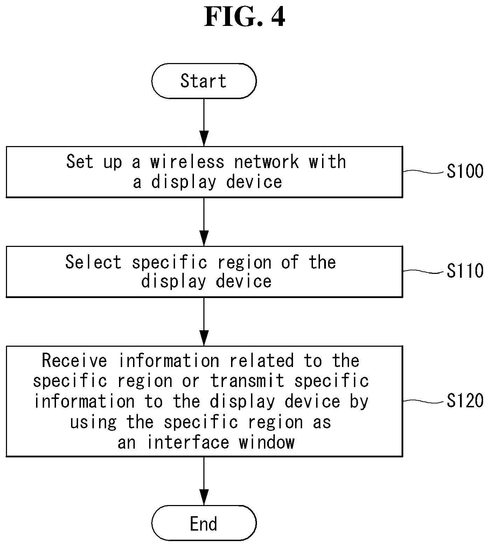

FIG. 4 is a flowchart illustrating a method of the mobile terminal 100 controlling the display device 200 according to an embodiment of the present invention. The method of controlling the display device 200 is described below with reference to relevant drawings.

When the remote control application is executed in the mobile terminal 100, the controller 180 of the mobile terminal 100 sets up a wireless network with the display device 200 at step S100. Next, the controller 180 selects a specific region displayed in the display unit 151 by using the cursor that moves in response to a user's manipulation at step S110.

When the specific region displayed in the display device 200 is selected, the controller 180 may receive information related to the specific region from the display device 200 or transmit specific information to the display device 200 by using the selected specific region as an interface window at S120.

The specific region of the display device 200 may be selected only if the cursor is placed in the specific region. For example, when the cursor is placed in an icon of a specific application displayed in the display device 200, the controller 180 may select the specific application and receive information about the specific application from the display device 200.

Furthermore, the specific region of the display device 200 may be selected by a click, a double clock, or a drag in the mobile terminal 100 in the state where the cursor has been placed. For example, a clock operation of a user is recognized in the mobile terminal 100 in the state where the cursor has been placed in an icon of a specific application displayed in the display device 200, the controller 180 may select the specific application and information about the specific application from the display device 200.

The information related to the specific region may include a specific region in itself (i.e., an image of the selected specific region) selected by a drag using the cursor, text selected by a drag using the cursor, information about an application where the cursor is placed, information related to content where the cursor is placed, the operation history of the display device 200, the execution history of an application selected by the cursor, and so on, but the scope of the present invention is not limited thereto.

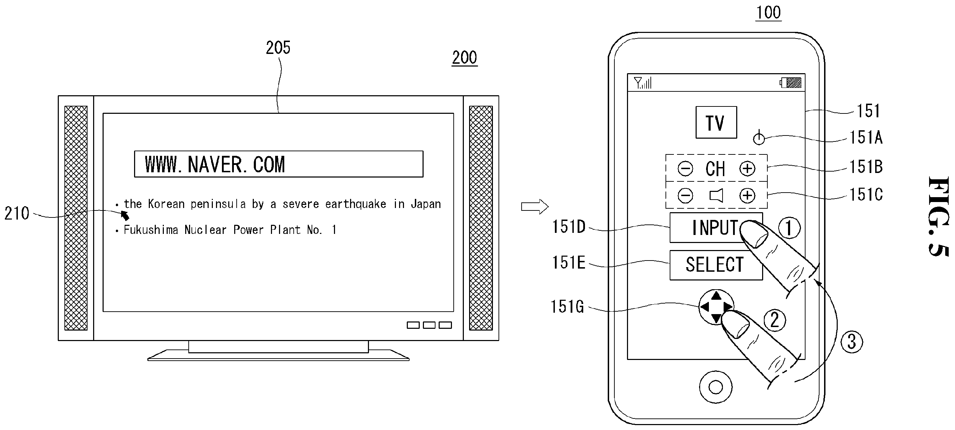

FIGS. 5 to 6 show states in which a user selects a specific region of the display device 200 by using the cursor 210 in the mobile terminal 100 according to an embodiment of the present invention. For reference, it is hereinafter assumed that the display unit 151 is smart TV. A process of the specific region being selected is described below with reference to relevant drawings.

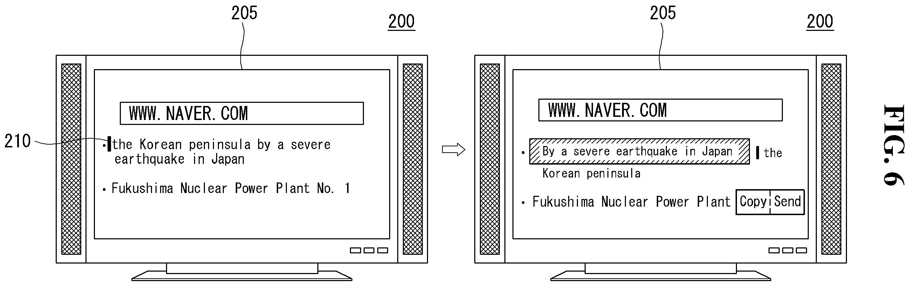

In the state where the cursor 210 having an arrow shape has been displayed in the execution screen of the web browsing application of the display device 200, a user touches the select button 151E in the execution screen of the TV remote control application. In response thereto, the shape of the cursor 210 is changed into a vertical line, as shown in FIG. 6.

Next, the user moves the cursor 210 to the right by manipulating the direction manipulation button 151G in the execution screen of the TV remote control application and then touches the select button 151E. In response thereto, text "by a severe earthquake in Japan" of news displayed in the display device 200 is selected, and a select window for copying the selected text "by a severe earthquake in Japan" or transmitting the selected text to the mobile terminal 100 is displayed in the display device 200, as shown in FIG. 6.

Unlike in FIGS. 5 and 6, a user may select a text part by moving the mobile terminal 100 to the right (i.e., dragging) in the state where the select button 151E has been touched. Here, the selected text may be selected and transmitted to the mobile terminal 100 without user's manipulation.

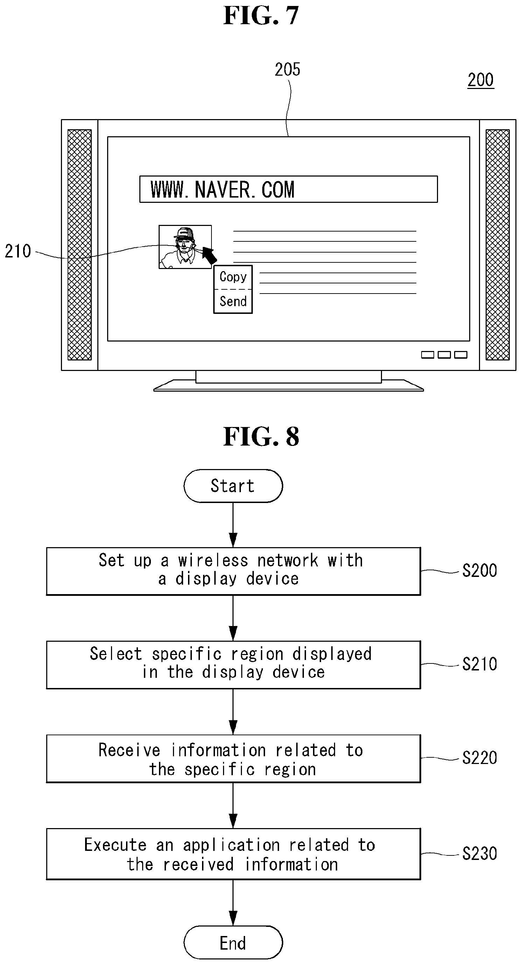

FIG. 7 shows another example where a user selects a specific region of the display device 200 by using the cursor 210 in the mobile terminal 100 according to an embodiment of the present invention. A process of the specific region being selected is described below with reference to relevant drawings.

Referring to FIG. 7, when a user places the cursor 210 in an image displayed in the execution screen of a web browsing application in the state where the execution screen of the web browsing application has been displayed in the display device 200, the image is selected, and a select window for copying the selected image or transmitting the selected image to the mobile terminal 100 is displayed. Here, the select window may be displayed when the user touches the select button 151E in the state where the cursor 210 has been placed in the image.

The methods of selecting a specific region, described above with reference to FIGS. 5 to 7, are only examples of methods of selecting a specific region which may be performed in the mobile terminal 100 according to the embodiment of the present invention. Accordingly, the scope of the present invention is not limited to the examples, and a specific region displayed in the display unit 151 may be selected using a variety of methods in addition to the above methods of selecting a specific region.

FIG. 8 is a flowchart illustrating a method of the mobile terminal 100 controlling the display device 200 according to another embodiment of the present invention. The method of controlling the display device is described below with reference to relevant drawings.

When the remote control application is executed in the mobile terminal 100, the controller 180 of the mobile terminal 100 sets up a wireless network with the display device 200 at step S200. Next, the controller 180 selects a specific region displayed in the display device 200 by using the cursor 210 that moves in response to a user's manipulation at step S210.

When the specific region is selected, the controller 180 receives information related to the specific region from the display device 200 at step S220. Next, the controller 180 executes a specific application pertinent to the received information at step S230. Here, the specific application pertinent to the information related to the specific region may have been previously set according to the information related to the specific region.

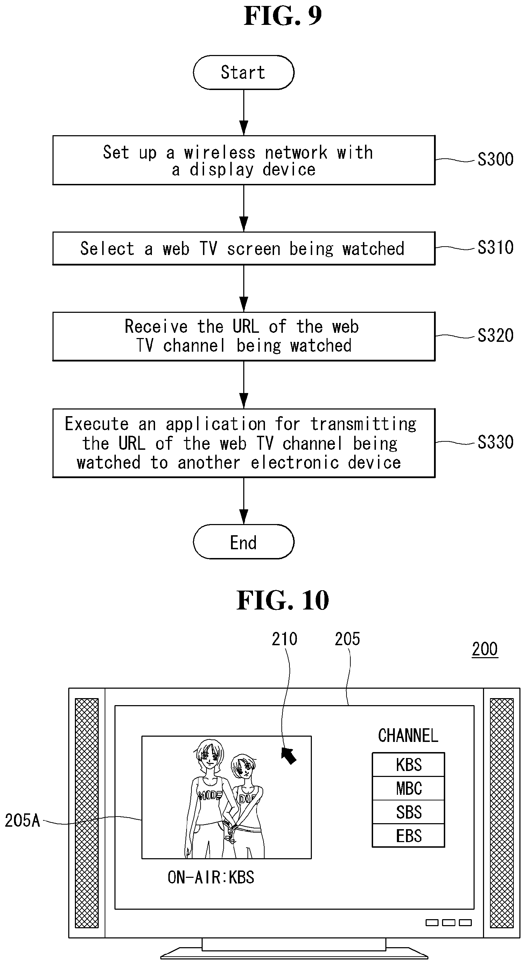

FIG. 9 is a flowchart illustrating an example of the method of the mobile terminal 100 controlling the display device 200 shown in FIG. 8. The method of controlling the display device 200 is described below with reference to relevant drawings.

When the remote control application is executed in the mobile terminal 100, the controller 180 of the mobile terminal 100 sets up a wireless network with the smart TV 200 at step S300. Next, the controller 180 selects the screen of a web TV that is being watched by using the cursor 210 that moves in response to a user's manipulation at step S310. When the screen of the web TV that is being watched is selected, the controller 180 receives the URL of a web TV channel that is being watched from the display device 200 at step S320.

Next, the controller 180 executes a predetermined specific application in order to transmit the received URL of the web TV channel to another electronic device at step S330. Here, the application for transmitting the received URL of the web TV channel to another electronic device may include an SMS or MMS message writing application, an e-mailing writing application, a Social Network Service (SNS) application and so on, but the scope of the present invention is not limited thereto.

FIGS. 10 to 12 show processes in which the message writing application for transmitting the URL of the web TV channel, received from the smart TV 200, to another electronic device according to the method of the mobile terminal 100 controlling the display device 200 shown in FIG. 9.

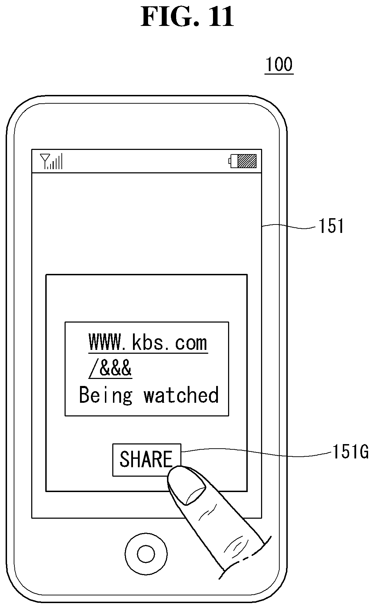

In FIG. 10, when a user places the cursor 210 in the screen of a web TV channel displayed in the smart TV 200 by manipulating the mobile terminal 100, the controller 180 of the mobile terminal 100 receives the URL www.kbs.com/&&& of a web TV channel, now being watched, from the smart TV 200 and displays the received URL in the display unit 151, as shown in FIG. 11.

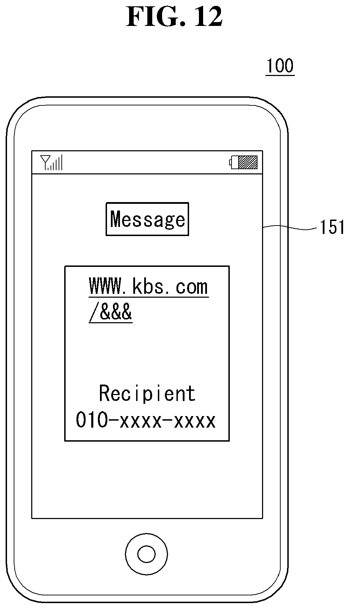

When the user touches a sharing button 151G displayed in the display unit 151 as shown in FIG. 11, the controller 180 may execute the message writing application for transmitting the URL of the web TV channel to another electronic device, as shown in FIG. 12. Unlike in FIG. 11, the controller 180 may directly execute an application for transmitting the URL of the web TV channel to another electronic device irrespective of whether the user has selected the sharing button.

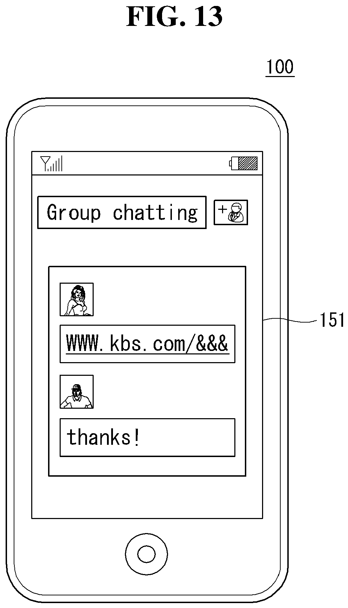

FIG. 13 shows a state where the SNS application for transmitting the URL of the web TV channel, received from the smart TV 200 shown in FIG. 10, from the mobile terminal 100 to another electronic device has been executed according to the present invention. From FIG. 13, it can be seen that www.kbs.com/&&& (i.e., the URL of the web TV channel) has been inputted to the entry box of the execution screen of the SNS application which is displayed in the display unit 151 of the mobile terminal 100 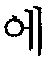 .

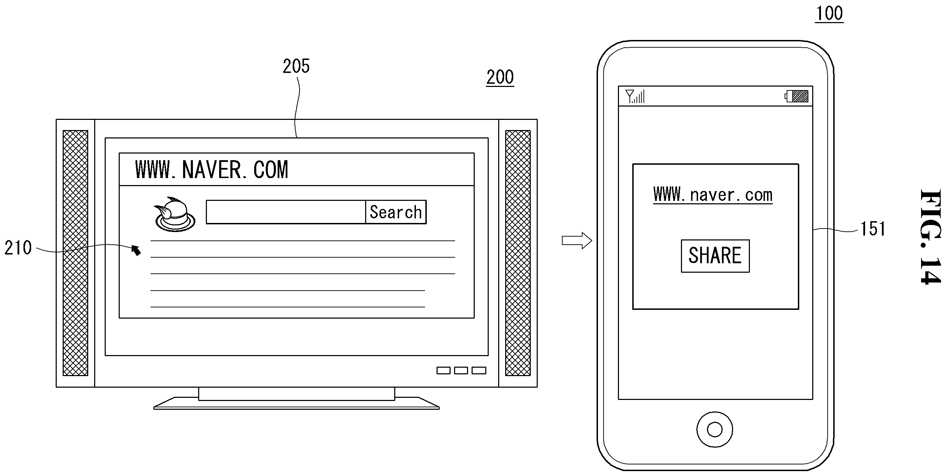

FIGS. 14 to 17 show examples where the mobile terminal 100 receives information related to a specific region from the display device 200 according to the present invention.

From FIG. 14, it can be seen that, when the cursor 210 displayed in the screen 205 of the smart TV 200 is placed in the execution screen of the web browsing application in response to a user's manipulation, the controller 180 of the mobile terminal 100 receives the URL of a web page, displayed in the screen 205 of the smart TV 200, from the smart TV 200 and displays the received URL of the web page in the display unit 151.

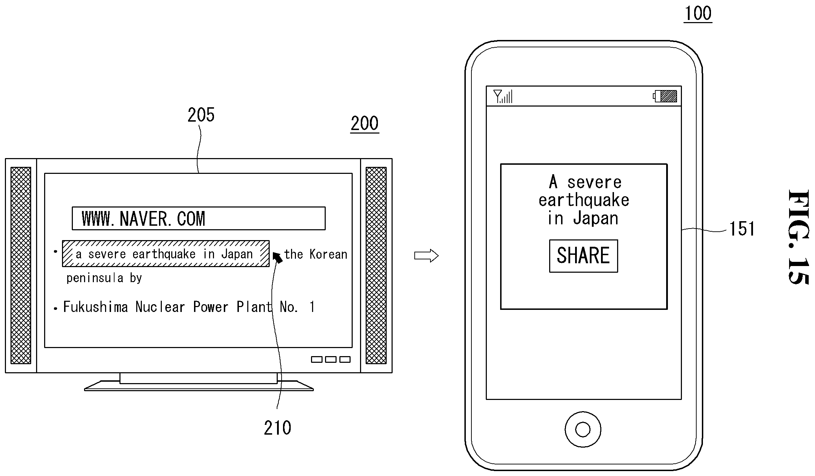

From FIG. 15, it can be seen that, when a user drags and selects part of the news of a web page displayed in the screen 205 of the smart TV 200 by using the cursor 210 displayed in the smart TV 200, the controller 180 of the mobile terminal 100 receives the selected part of the news and displays the received part of the news in the display unit 151.

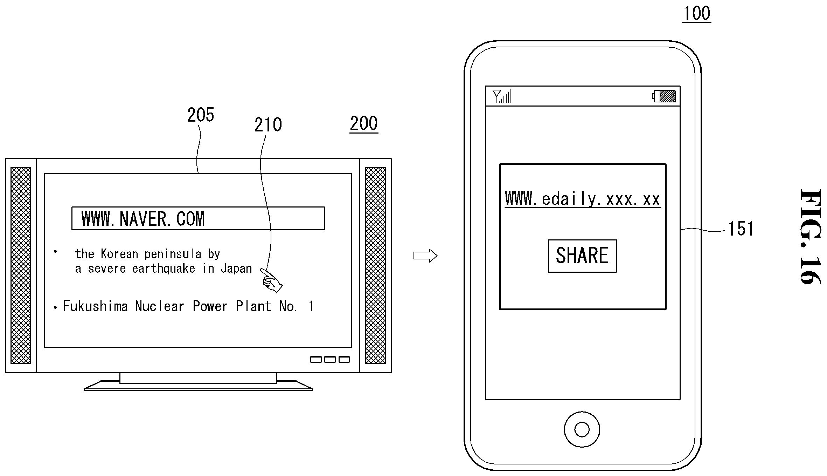

From FIG. 16, it can be seen that, when the cursor 210 displayed in the screen 205 of the smart TV 200 is placed in a specific news of a web page displayed in the screen 205 of the smart TV 200 in response to a user's manipulation, the controller 180 of the mobile terminal 100 extracts and receives an URL corresponding to the news displayed in the screen 205 of the smart TV 200 and displays the URL, corresponding to the news, in the display unit 151.

Here, if a click operation (e.g., one touch on the select button 151E shown in FIG. 3) for the specific news has been set as an operation for displaying the specific news in the screen, a user may select the specific news of the web page through a double clock operation (e.g., two consecutive touches on the select button 151E shown in FIG. 3) for the specific news.

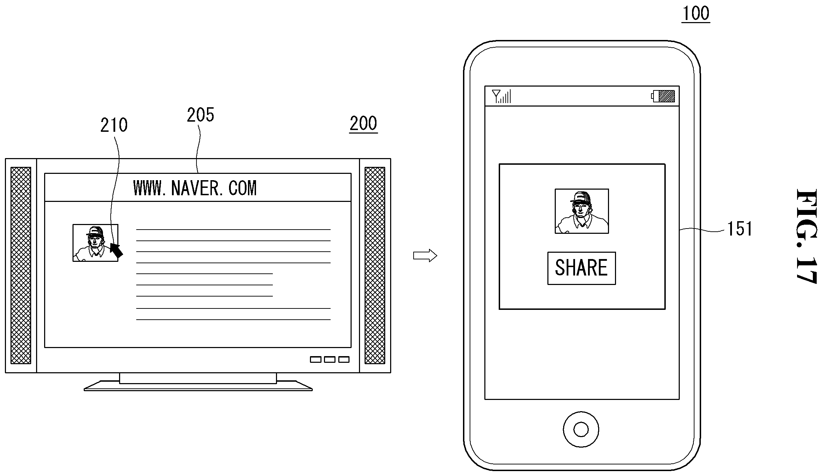

From FIG. 17, it can be seen that, when the cursor 210 displayed in the screen 205 of the smart TV 200 is placed in a specific image displayed in the screen 205 of the smart TV 200 in response to a user's manipulation, the controller 180 of the mobile terminal 100 receives the specific image and displays the received image in the display unit 151.

The method of the mobile terminal 100 according to the present invention receiving information, related to a specific region, from the display device 200 is not limited to the above examples described above with reference to FIGS. 14 to 17.

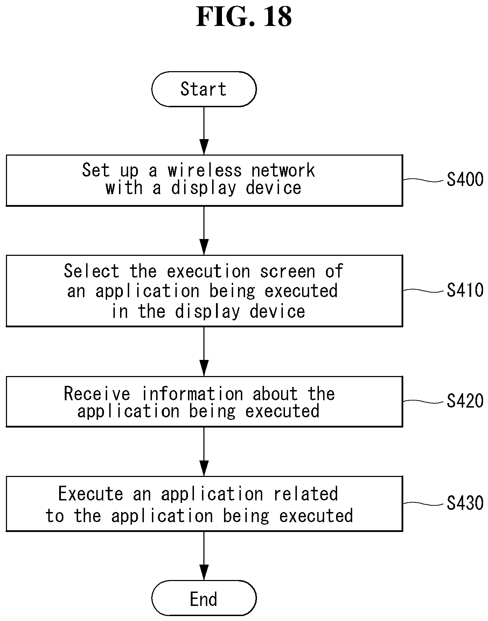

FIG. 18 is a flowchart illustrating another example of the method of the mobile terminal 100 controlling the display device 200 shown in FIG. 8. The method of controlling the display device 200 is described below with reference to relevant drawings.

When the remote control application is executed in the mobile terminal 100, he controller 180 of the mobile terminal 100 sets up a wireless network with the display device 200 at step S400. Next, the controller 180 selects the execution screen of an application being executed by using the cursor that moves in response to a user's manipulation at step S410.

When the execution screen of the application being executed is selected, the controller 180 receives information about the application being executed at step S420. Next, the controller 180 selects an application related to the application being executed, from among applications mounted on the mobile terminal 100, by analyzing the information about the application being executed and executes the selected application at step S430. The application related to the application being executed may have been previously set.

Here, an application related to a specific application may be an application pertinent to the function or object of the specific application or may be an application necessary to execute the specific application. For example, if the specific application is an English-related application, an application related to the specific application may be an English dictionary. For another example, if the specific application is a word processor application, an application related to the specific application may be a keypad application.

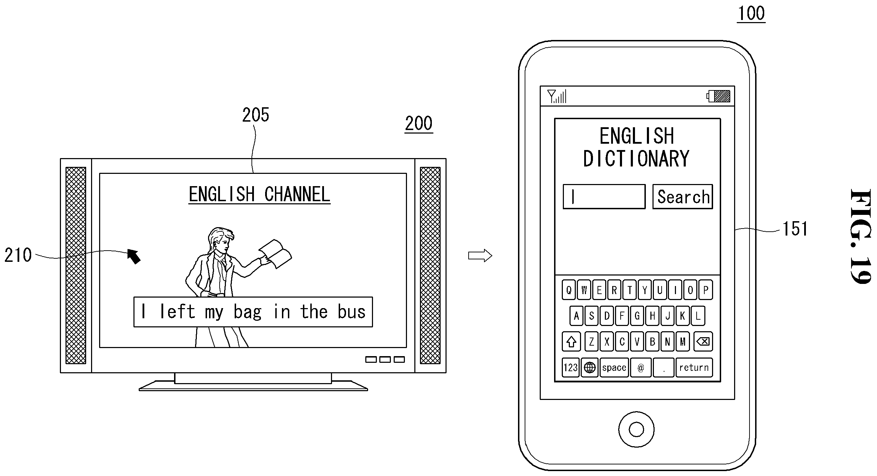

Examples where the method of the mobile terminal 100 controlling the display device 200 shown in FIG. 18 is performed are described below with reference to FIGS. 19 to 22.

FIG. 19 shows an example where the method of the mobile terminal 100 controlling the display device 200 shown in FIG. 18 is performed. From FIG. 19, it can be seen that, when the execution screen of an English education application displayed in the screen 205 of the smart TV 200 is selected by the cursor 210, an English dictionary application previously set as an application related to the English education application is executed in the mobile terminal 100. Accordingly, a user can search for English words through the mobile terminal 100 while watching English education through the smart TV 200.

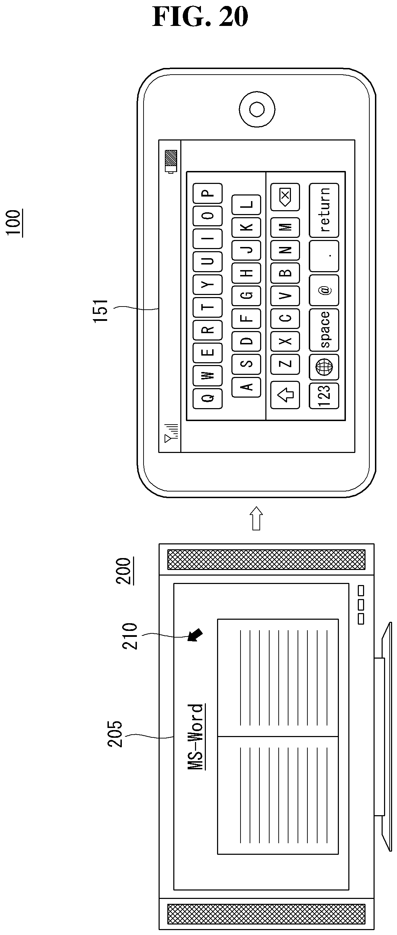

FIG. 20 shows another example where the method of the mobile terminal 100 controlling the display device 200 shown in FIG. 18 is performed. From FIG. 20, it can be seen that, when the execution screen of a word processor application displayed in the screen 205 of the smart TV 200 is selected by the cursor 210, a keypad application previously set as an application related to the word processor application is executed in the mobile terminal 100. Accordingly, a user may input characters to the execution screen of the word processor by using a keypad displayed in the mobile terminal 100.

Although not shown in the drawing, if a region selected by the cursor 210 is a character entry region, the controller 180 may display a virtual keypad in at least one of the display device 200 and the mobile terminal 100, irrespective of a type of an application being executed in the display device 200.

For example, if a web browsing application is being executed in the display device 200 and the cursor 210 is placed in the character entry region of the execution screen of the web browsing application, the controller 180 may display a virtual keypad in the display device 200. Accordingly, a user may select a character to be inputted in the keypad by using the cursor 210 that tracks the motion of the mobile terminal 100.

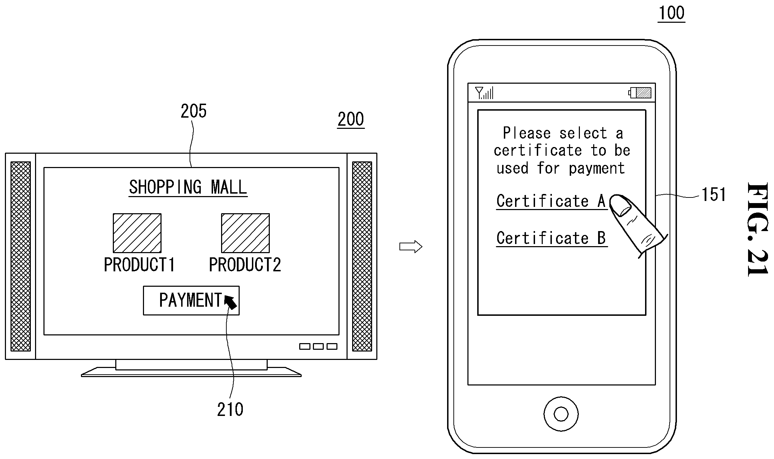

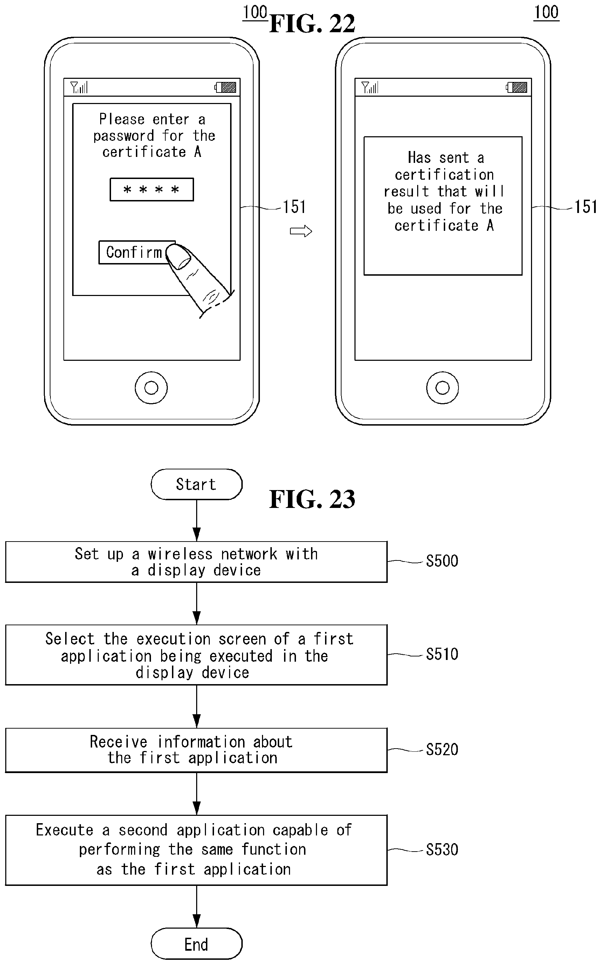

FIGS. 21 and 22 show yet another example where the method of the mobile terminal 100 controlling the display device 200 shown in FIG. 18 is performed. From FIG. 21, it can be seen that, when a payment button is selected in a shopping mall web page displayed in the screen 205 of the smart TV 200 by the cursor 210, a certification application previously set as an application related to a payment function is executed in the mobile terminal 100.

Accordingly, a user may perform a certification task for payment that will be performed through the shopping mall web page by using the certification application executed in the mobile terminal 100. For example, when the user selects a certificate A displayed in the mobile terminal 100 as shown in FIG. 21, the controller 180 of the mobile terminal 100 displays a message requesting that a password for the certificate A be entered as shown in FIG. 22. Next, when the user enters a password for the certificate A and then presses a confirm button, the mobile terminal 100 may perform a certification task and transmit a result of the certification to the smart TV 200, as shown in FIG. 22.

FIG. 23 is a flowchart illustrating yet another example of the method of the mobile terminal 100 controlling the display device 200 shown in FIG. 8. The method of controlling the display device 200 is described below with reference to relevant drawings.

When the remote control application is executed in the mobile terminal 100, the controller 180 of the mobile terminal 100 sets up a wireless network with the display device 200 at step S500. Next, the controller 180 selects the execution screen of a first application being executed by using the cursor that moves in response to a user's manipulation at step S510.

When the execution screen of the first application is selected, the controller 180 receives information about the first application at step S520. Next, the controller 180 selects a second application capable of performing the same function as the first application, from among applications mounted on the mobile terminal 100, by analyzing the information about the first application and executes the selected second application at step S530. The second application capable of performing the same function as the first application may have previously been set.

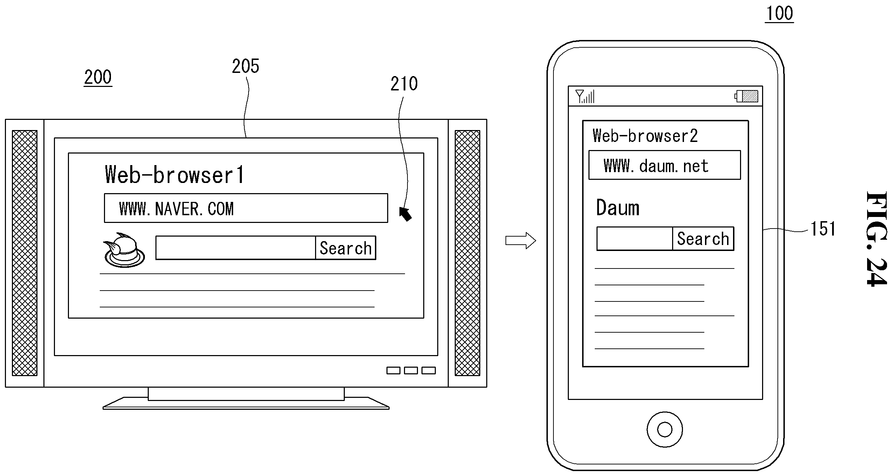

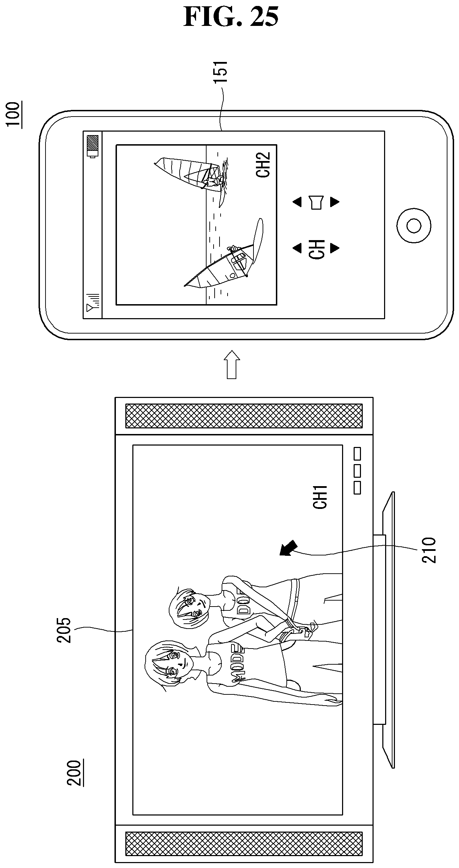

Examples where the method of the mobile terminal 100 controlling the display device 200 shown in FIG. 23 is performed are described below with reference to FIGS. 24 and 25.

FIG. 24 shows an example where the method of the mobile terminal 100 controlling the display device 200 shown in FIG. 23 is performed. From FIG. 24, it can be seen that, when the execution screen of a first web browsing application is selected by the cursor 210, a second web browsing application capable of performing the same function as the first web browsing application is executed in the mobile terminal 100. Accordingly, the user may perform web browsing through each of the display device 200 and the mobile terminal 100.

FIG. 25 shows another example where the method of the mobile terminal 100 controlling the display device 200 shown in FIG. 23 is performed. From FIG. 25, it can be seen that, when the execution screen of a web TV application is selected by the cursor 210, an application through which web TV may be watched is executed in the mobile terminal 100. Accordingly, a user may watch the web TV each of the display device 200 and the mobile terminal 100.

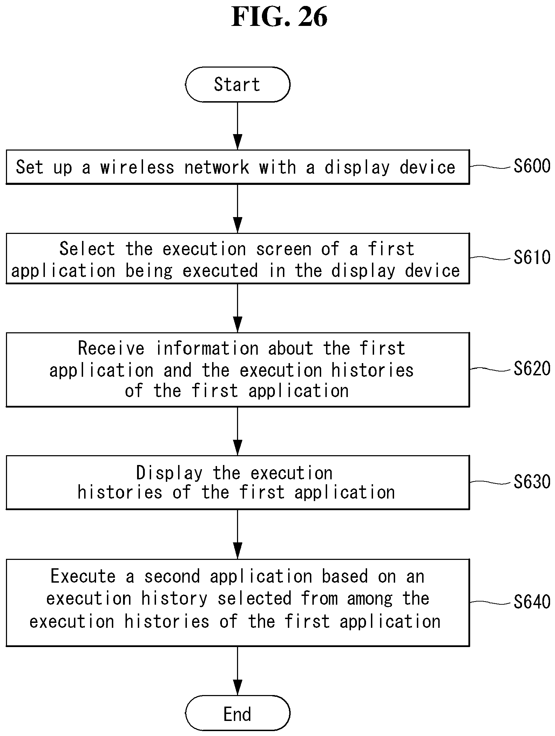

FIG. 26 is a flowchart illustrating further yet another example of the method of the mobile terminal 100 controlling the display device 200 shown in FIG. 8. The method of controlling the display device 200 is described below with reference to relevant drawings.

When the remote control application is executed in the mobile terminal 100, the controller 180 of the mobile terminal 100 sets up a wireless network with the display device 200 at step S600. Next, the controller 180 selects the execution screen of a first application being executed by using the cursor that moves in response to a user's manipulation at step S610.

When the execution screen of the first application is selected, the controller 180 receives information about the first application and the execution history of the first application from the display device 200 at step S620 and displays the received execution history of the first application in the display unit 151 at step S630.

Next, the controller 180 executes a second application capable of performing the same function as the first application on the basis of an execution history, selected from the execution history of the first application, at step S640. The second application capable of performing the same function as the first application may have previously been set.

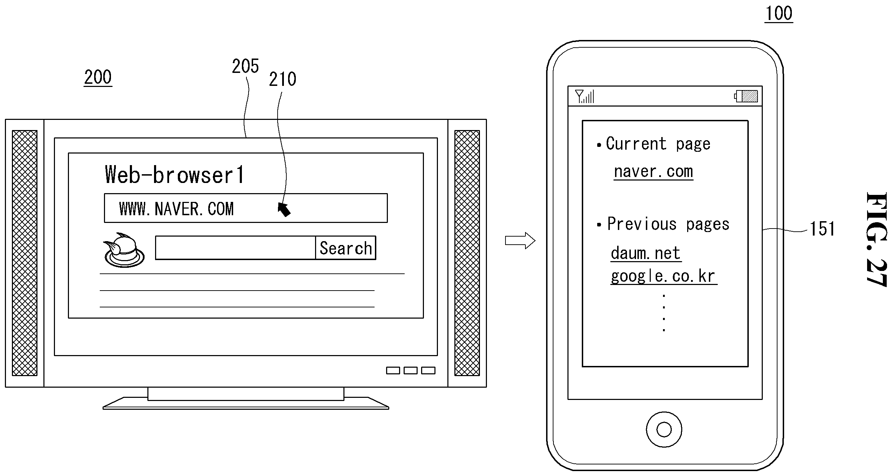

Examples where the method of the mobile terminal 100 controlling the display device 200 shown in FIG. 26 is performed are described below with reference to FIGS. 27 to 29.

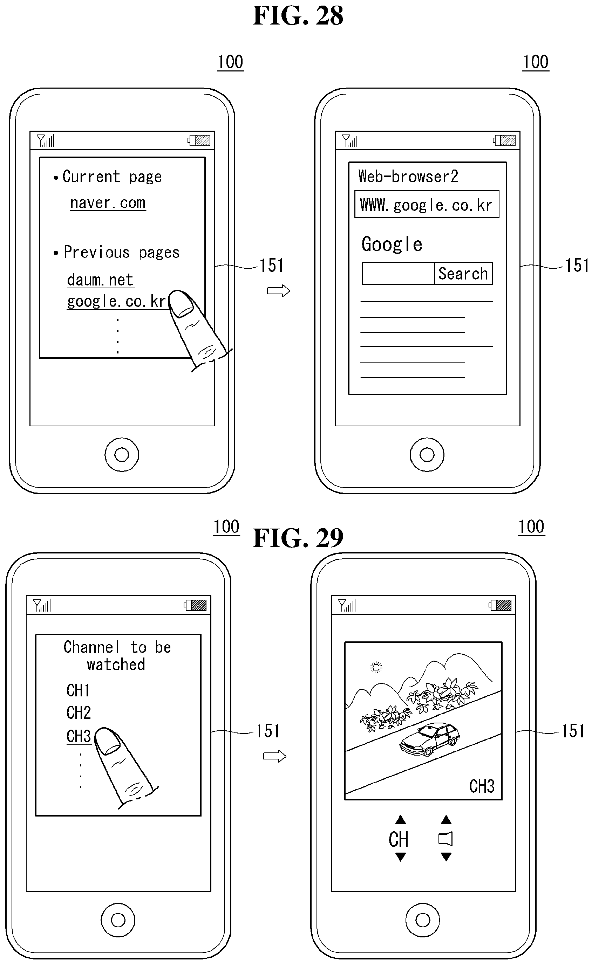

FIGS. 27 and 28 show examples where the method of the mobile terminal 100 controlling the display device 200 shown in FIG. 26 is performed. From FIG. 27, it can be seen that, when the execution screen of a first web browsing application is selected by the cursor 210, the URLs of a current page and of previous pages that have been visited through the first web browsing application are displayed in the mobile terminal 100.

From FIG. 28, it can be seen that, when a user selects a specific web page in the state where a current page and previous pages have been displayed in the mobile terminal 100, the mobile terminal 100 accesses the selected web page "www.google.co.kr" by executing a second web browsing application.

FIG. 29 shows another example where the method of the mobile terminal 100 controlling the display device 200 shown in FIG. 26 is performed. From FIG. 29, it can be seen that, when a third channel CH3 in web TV watching history is selected in the state where the web TV watching history has been displayed in the mobile terminal 100 through a web TV application, the mobile terminal 100 displays content, provided through the third channel CH3, in the display unit 151 by executing the web TV application.

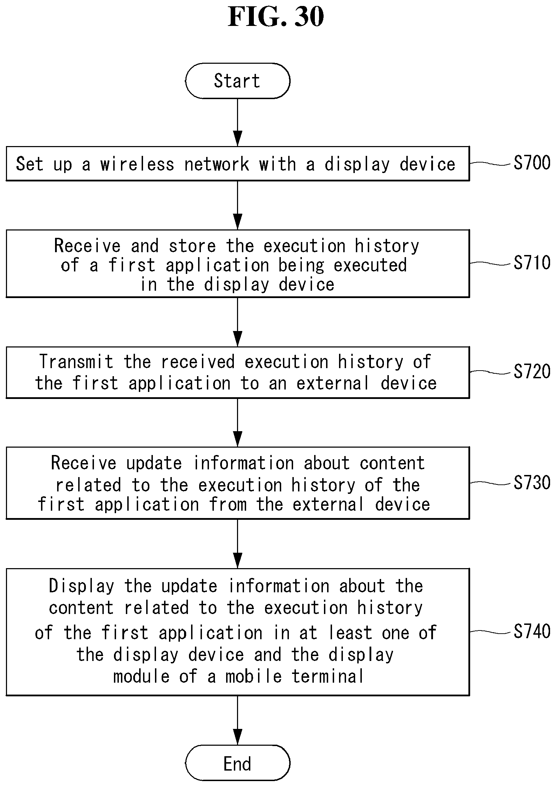

FIG. 30 is a flowchart illustrating still yet another example of the method of the mobile terminal 100 controlling the display device 200 shown in FIG. 8. The method of controlling the display device 200 is described below with reference to relevant drawings.

When the remote control application is executed in the mobile terminal 100, the controller 180 of the mobile terminal 100 sets up a wireless network with the display device 200 at step S700. Next, when the execution screen of a first application being executed is selected by the cursor that moves in response to a user's manipulation, the controller 180 receives and stores information about the first application and the execution history of the first application at step S710 and transmits the received execution history of the first application to an external device at step S720.

For example, if the first application is a web TV application, the execution history of the first application may be a web TV channel list that a user has watched. If the first application is a web browsing application, the first application may be a web page list that a user has visited.

Next, the controller 180 receives update information about content related to the execution history of the first application from the external device at step S730. For example, if the execution history of the first application is a web TV channel list that a user has watched, the external device may be a web TV management server, and the update information about the content related to the execution history of the first application may be information about an updated TV program.

If the execution history of the first application is a web page list that a user has visited, the external device may be a web page management server, and the update information of the content related to the execution history of the first application may be information about the content of an updated web page.

When content update information related to the execution history of the first application is received from the external device, the controller 180 displays the content update information in at least one of the display device 200 and the display unit 151 of the mobile terminal 100 at step S740.

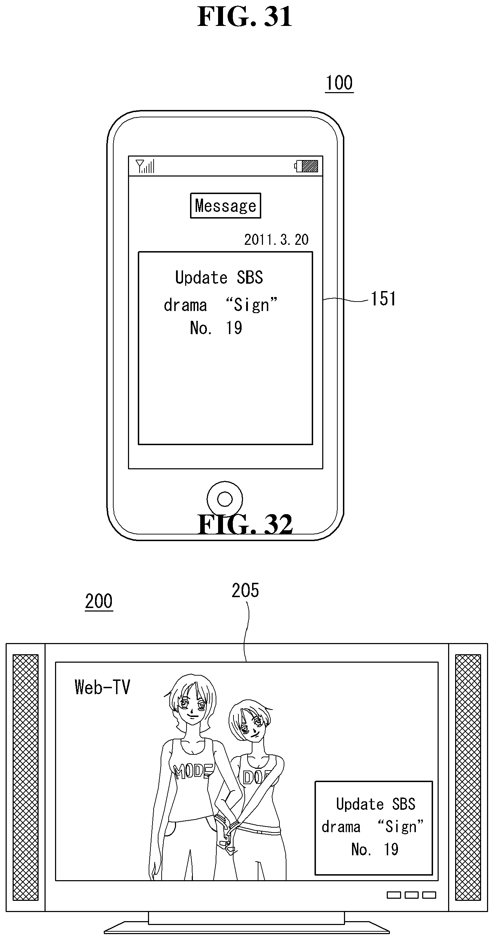

Examples where the method of the mobile terminal 100 controlling the display device 200 shown in FIG. 30 is performed are described below with reference to FIGS. 31 to 32.

FIG. 31 shows an example where the method of the mobile terminal 100 controlling the display device 200 shown in FIG. 30 has been performed. From FIG. 31, it can be seen that, when information indicating that "No. 19" of "SIGN" (i.e., a drama being broadcasted by "SBS" which is a web TV channel that a user has watched) has been updated is received from a web TV management server, a message indicative of the information has been displayed in the display unit 151 of the mobile terminal 100.

FIG. 32 shows another example where the method of the mobile terminal 100 controlling the display device 200 shown in FIG. 30 has been performed. From FIG. 32, it can be seen that, when information indicating that "No. 19" of "SIGN" (i.e., a drama being broadcasted by "SBS" which is a web TV channel that a user has watched) has been updated is received from a web TV management server, a message indicative of the information has been displayed in the display device 200.

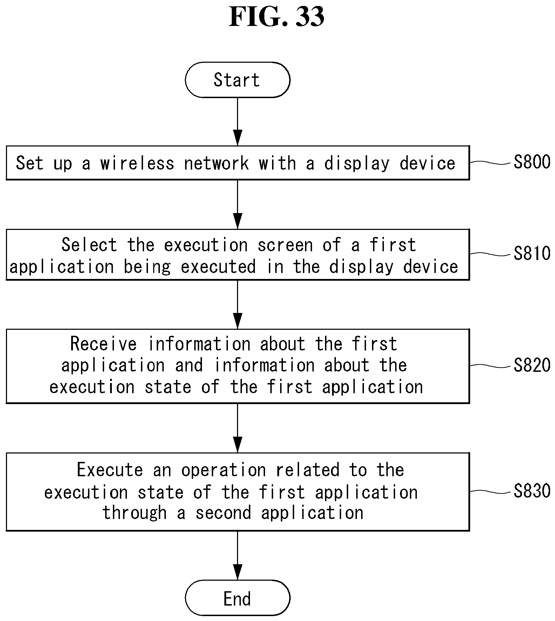

FIG. 33 is a flowchart illustrating further still another example of the method of the mobile terminal 100 controlling the display device 200 shown in FIG. 8. The method of controlling the display device 200 is described below with reference to relevant drawings.

When the remote control application is executed in the mobile terminal 100, the controller 180 of the mobile terminal 100 sets up a wireless network with the display device 200 at step S800. Next, the controller 180 selects the execution screen of a first application being executed by using the cursor that moves in response to a user's manipulation at step S810.

When the execution screen of the first application is selected, the controller 180 receives information about the first application and information related to an execution state of the first application from the display device 200 at step S820.

Here, the execution state of the first application and the information related to the first application may include not only information indicating the execution state in itself of the first application, but also information for executing the same or similar object or function to or as the execution state of the first application.

For example, if a web browsing application is being executed in the display device 200, information related to an execution state of the web browsing application may include information about a web page now being accessed, but also information about a web page linked to the accessed web page, information about a web page having the same or similar object as or to the accessed web page and information about a page before or after the accessed web page.

Next, the controller 180 executes an operation related to the execution state of the first application through a second application based on the execution state of the first application at step S830. The second application capable of performing the operation related to the execution state of the first application may have previously been set. Furthermore, an operation related to the execution state of the first application may have previously been set.

For example, if a web browsing application is being executed in the display device 200 and a page now being accessed is the homepage of a data search site, the controller 180 receives information, including the URL of the current web page and the URL of a third data search site for searching data, and accesses the third search site by executing the web browsing application.

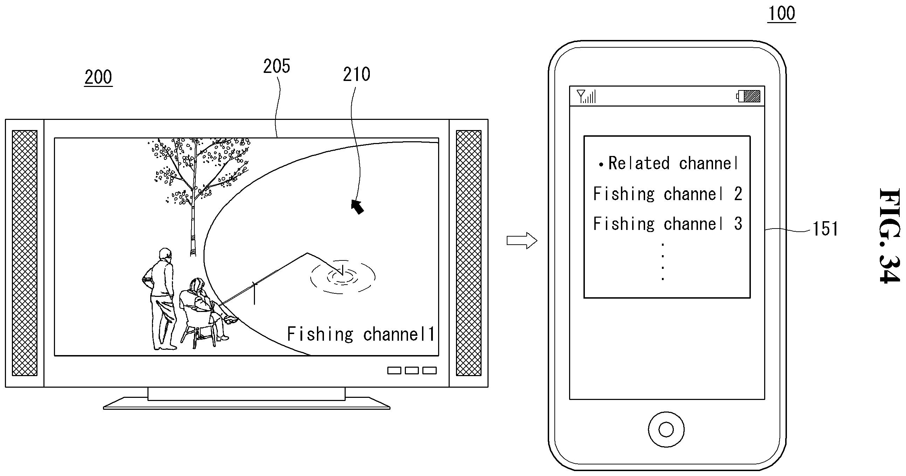

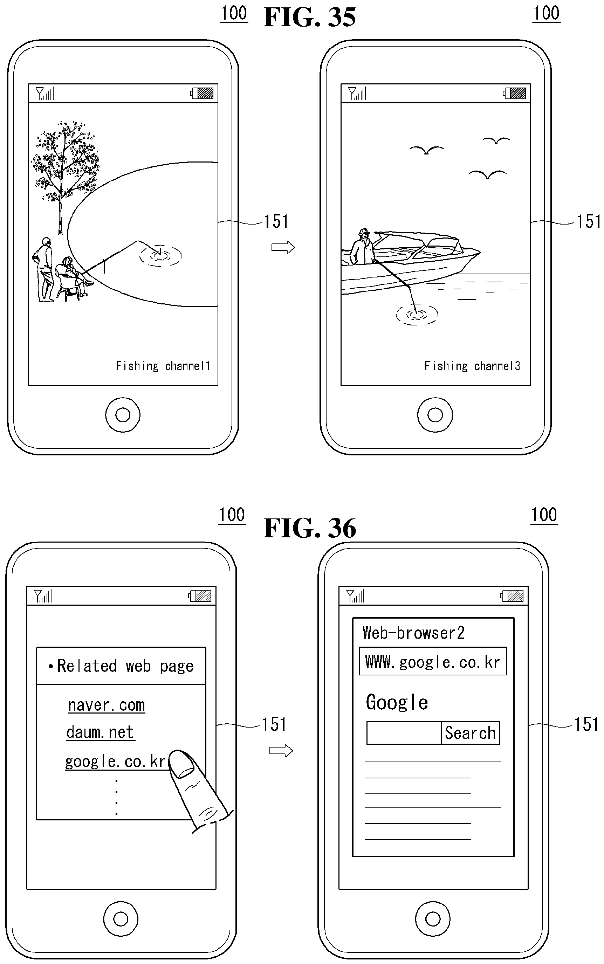

Examples where the method of the mobile terminal 100 controlling the display device 200 shown in FIG. 34 is performed are described below with reference to FIGS. 34 and 36.

FIG. 34 shows an example where the method of the mobile terminal 100 controlling the display device 200 shown in FIG. 33 is performed. From FIG. 34, it can be seen that, when the execution screen of "Fishing Channel 1" in web TV is selected by the cursor 210, "Fishing Channel 2" and "Fishing Channel 3", providing fishing-related content like "Fishing Channel 1" now being broadcasted by the smart TV 200, are displayed in the display unit 151 of the mobile terminal 100. Here, when a user selects any one of the fishing channels displayed in the display unit 151, the controller 180 of the mobile terminal 100 may display the content of the selected fishing channel in the display unit 151 by executing a web TV application.

FIG. 35 shows another example where the method of the mobile terminal 100 controlling the display device 200 shown in FIG. 33 is performed. Referring to FIG. 35, when the execution screen of "Fishing Channel 1" in web TV is selected by the cursor 210, the controller 180 of the mobile terminal 100 may directly display the content of "Fishing Channel 3" (i.e., another fishing channel) in the display unit 151 by executing a web TV application irrespective of a user's manipulation.

FIG. 36 shows yet another example where the method of the mobile terminal 100 controlling the display device 200 shown in FIG. 33 is performed. From FIG. 36, it can be seen that web pages related to a web page now being accessed in a web browsing application that is now being executed in the display device 200 are displayed in the display unit 151 of the mobile terminal 100. Furthermore, it can be seen that, when any one of the web pages related to the accessed web page is selected by a user's touch, the controller 180 of the mobile terminal 100 accesses the selected web page by executing a web browsing application.

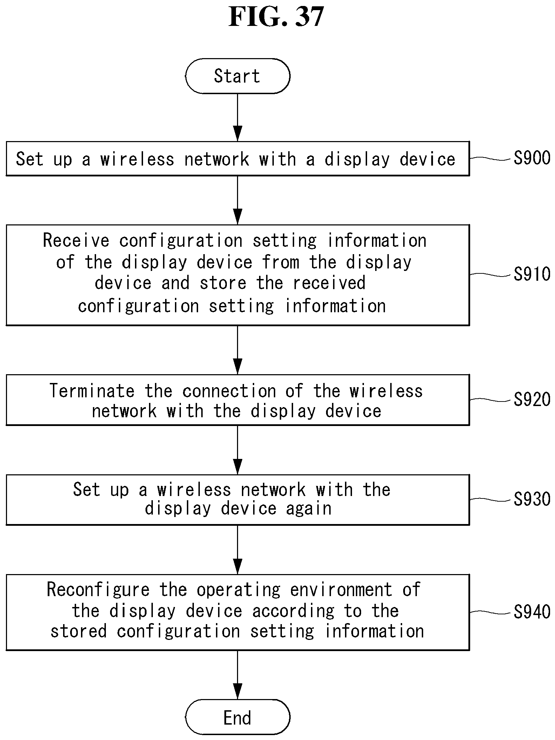

FIG. 37 is a flowchart illustrating still yet another example of the method of the mobile terminal 100 controlling the display device 200 shown in FIG. 8. The method of controlling the display device 200 is described below with reference to relevant drawings.

When the remote control application is executed in the mobile terminal 100, the controller 180 of the mobile terminal 100 sets up a wireless network with the display device 200 at step S900. Next, the controller 180 selects a specific region of the display device 200 by using the cursor that moves in response to a user's manipulation in order to receive configuration setting information about the display device 200, receives the configuration setting information of the display device 200 from the display device 200, and stores the received configuration setting information at step S910.

The configuration setting information of the display device 200 may include screen brightness, the volume, the size of a screen, types and arrangement of icons displayed in the screen, network setting information, etc. of the display device 200, but the scope of the present invention is not limited thereto.

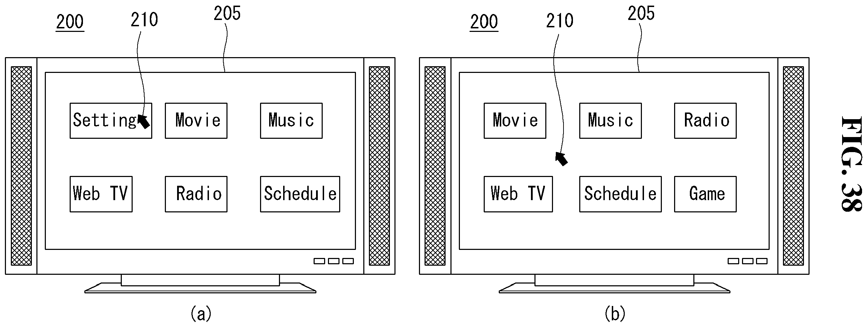

FIG. 38 shows an example where a specific region is selected in order to receive configuration setting information about the display device 200 according to the method of controlling the display device 200 shown in FIG. 37.

Referring to FIG. 38(a), when an icon indicating the configuration setting application of the display device 200 is selected by the cursor 210, the mobile terminal 100 may receive configuration setting information about the display device 200. Referring to FIG. 38(b), even when the space region of the display device 200 is selected by the cursor 210, the mobile terminal 100 may receive the configuration setting information of the display device 200.

After the configuration setting information of the display device 200 is stored in the mobile terminal 100, the connection of the wireless network with the display device 200 is terminated at step S920, and the a wireless network with the display device 200 is set up again at step S930. Accordingly, the mobile terminal 100 reconfigures the operating environment of the display device 200 according to the stored configuration setting information at step S940.

In other words, according to the method of controlling the display device 200 shown in FIG. 38, the user of the mobile terminal 100 can easily configure the operating environment of the display device 200 according to what he wants even after another user has used the display device 200. For example, if the display device 200 is smart TV and another user has arbitrarily changed the screen brightness, volume, etc. of the smart TV 200, the user of the mobile terminal 100 can restore the screen brightness, volume, etc. of the smart TV 200 to a desired state.

The mobile terminal 100 may receive the configuration setting information of the display device 200 for each of applications mounted on the display device 200 and store the received applications. In this case, the user of the mobile terminal 100 can configure the operating environment of a specific application according to what he wants, even after another user has used a specific application mounted on the display device 200.

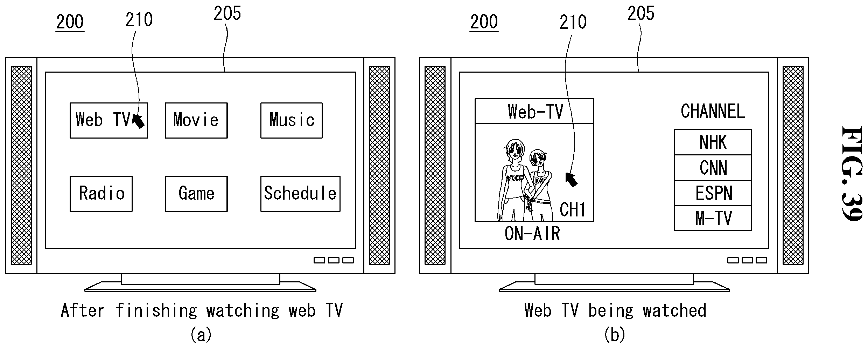

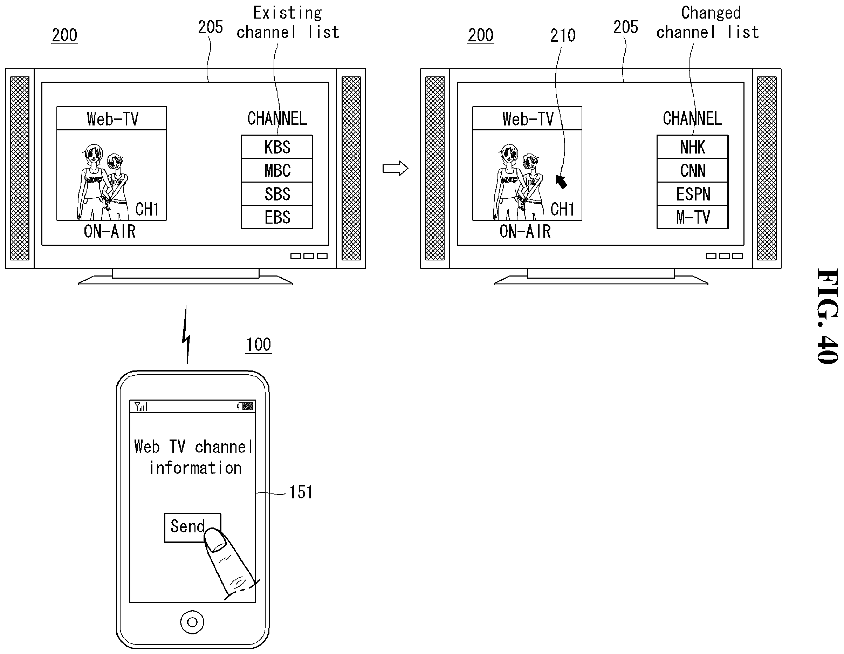

FIGS. 39 and 40 show processes in which the operating environment of the display device 200 is configured on an application basis according to the method of controlling the display device 200 shown in FIG. 38.

Referring to FIG. 39(a), when an icon indicating the web TV application of the display device 200 is selected by the cursor 210, the mobile terminal 100 may receive configuration setting information about the web TV application. Furthermore, referring to FIG. 39(b), even through the execution screen of the web TV application is selected by the cursor 210, the mobile terminal 100 may receive the configuration setting information of the web TV application.

From FIG. 40, it can be seen that, when web TV channel information is received from the mobile terminal 100 in the state where channels included in a channel list displayed in the execution screen of a web TV application are "KBS, MBC, SBS, EBS", the channels included in the channel list are changed into channels "NHK, CNN, ESPN, M-TV".

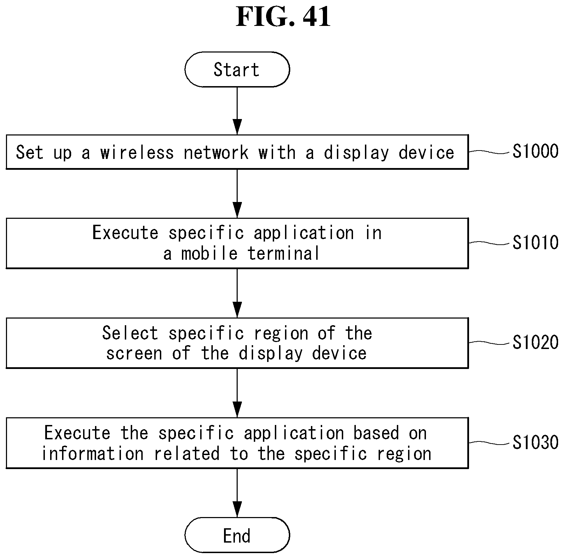

FIG. 41 is a flowchart illustrating a method of the mobile terminal 100 controlling the display device 200 according to yet another embodiment of the present invention. The method of the mobile terminal 100 controlling the display device 200 is described below with reference to relevant drawings.

When the remote control application is executed in the mobile terminal 100, the controller 180 of the mobile terminal 100 sets up a wireless network with the display device 200 at step S1000. A specific application is executed in the mobile terminal 100 in the state where the wireless network with the display device 200 has been set up at step S1010.

Next, a specific region of the screen of the display device 200 is selected by the cursor 210 that moves in response to a user's manipulation at step S1020. When the specific region is selected, the controller 180 receives information related to the specific region from the display device 200 and executes the specific application based on the received information related to the specific region at step S1030. Although an application now being executed in the mobile terminal 100 has been described as an example in FIG. 41, the controller 180 may execute a specific application that is ready to be executed on the basis of the information related to the specific region.

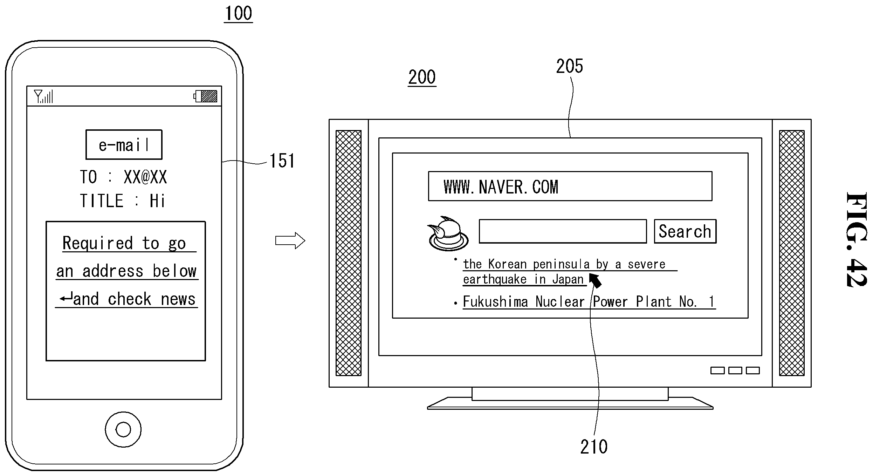

Examples where the method of the mobile terminal 100 controlling the display device 200 shown in FIG. 41 are described below with reference to FIGS. 42 to 45.

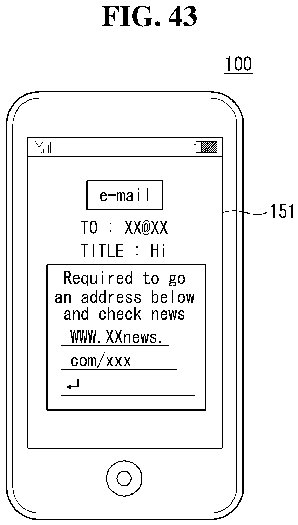

FIGS. 42 and 43 show examples of a process in which the method of the mobile terminal 100 controlling the display device 200 shown in FIG. 41 is performed. From FIG. 42, it can be seen that, in the state where an e-mailing writing application has been executed in the mobile terminal 100, specific news of a web page displayed in the display device 200 is selected by the cursor 210.

From FIG. 43, it can be seen that, when specific news is selected by the cursor 210, an URL corresponding to the specific news is displayed in the execution screen of an e-mailing writing application now being executed in the mobile terminal 100.

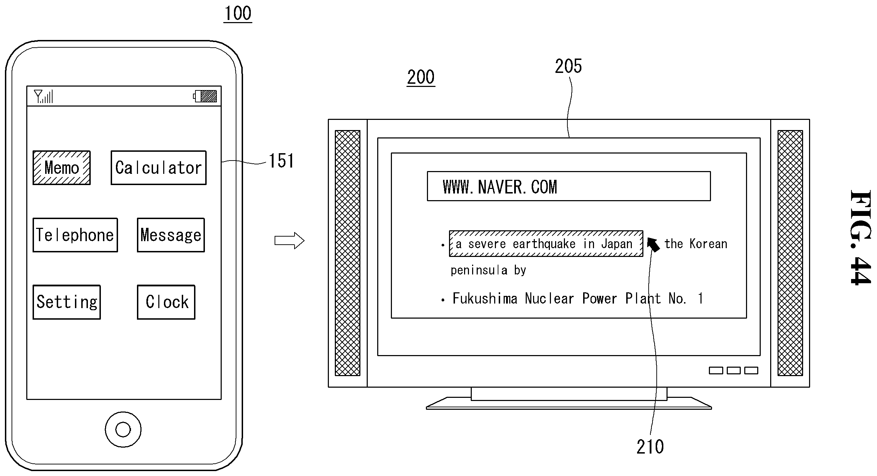

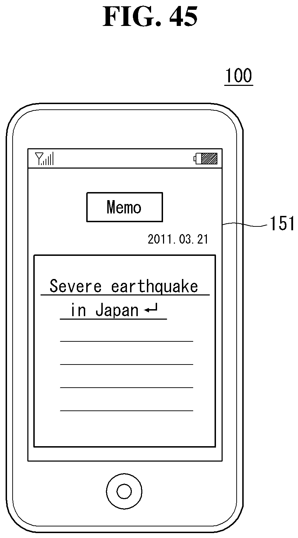

FIGS. 44 and 45 show another example of a process in which the method of the mobile terminal 100 controlling the display device 200 shown in FIG. 41 is performed. From FIG. 44, it can be seen that, in the state where an icon indicating a memo application has been selected in the mobile terminal 100, part of specific news of a web page displayed in the display device 200 is selected by the cursor 210.

From FIG. 45, it can be seen that, when specific news is selected by the cursor 210, the controller 180 of the mobile terminal 100 selects a selected memo application and, at the same time, applies text "Severe earthquake in Japan" (i.e., part of the selected specific news) to the execution screen of the memo application.

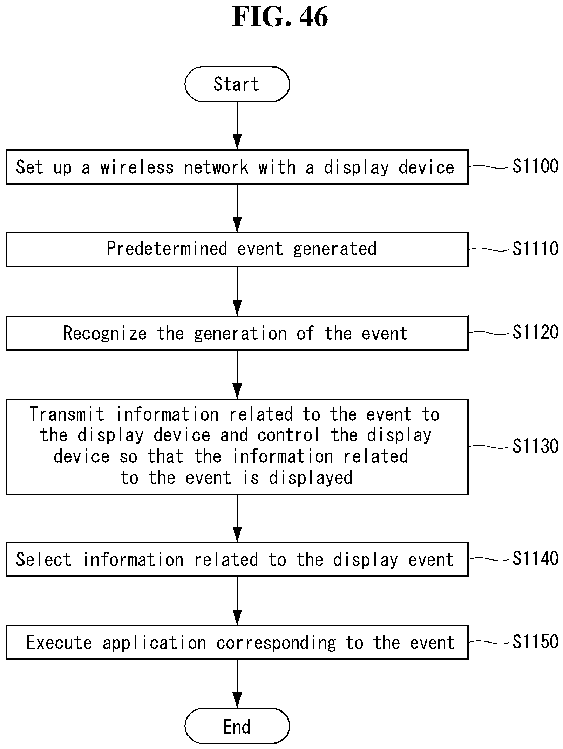

FIG. 46 is a flowchart illustrating a method of the mobile terminal 100 controlling the display device 200 according to still yet another embodiment of the present invention. The method of the mobile terminal 100 controlling the display device 200 is described below with reference to relevant drawings.

When the remote control application is executed in the mobile terminal 100, the controller 180 of the mobile terminal 100 sets up a wireless network with the display device 200 at step S1100. When a predetermined event is generated in the state where the wireless network with the display device 200 has been formed at step S1110, the controller 180 recognizes the generation of the predetermined event at step S1120. Here, the predetermined event may include a message reception event, an incoming call event, etc., but the scope of the present invention is not limited thereto.

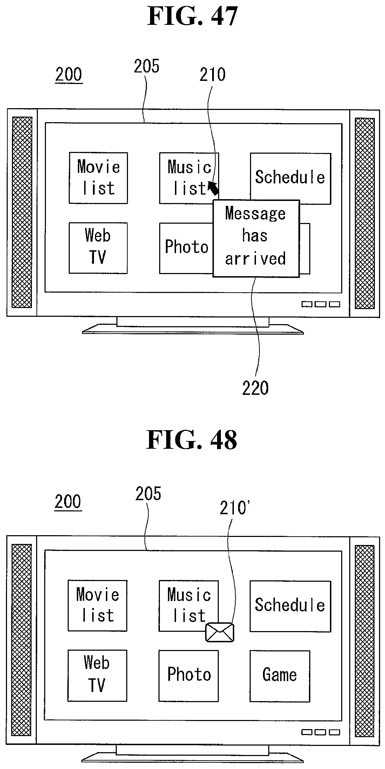

In response thereto, the controller 180 controls the display device 200 by transmitting information related to the generated event to the display device 200 so that the information related to the event is displayed at step S1130. Examples where the information related to the event is displayed in the display device 200 are described below with reference to FIGS. 47 to 51.

FIGS. 47 to 51 show states in which information related to an event generated in the mobile terminal 100 has been displayed in the display device 200 according to the method of the mobile terminal 100 controlling the display device 200 shown in FIG. 46.

From FIG. 47, it can be seen that, when a message reception event is generated in the mobile terminal 100 in the state where a wireless network with the display device 200 has been set up, the mobile terminal 100 may control the display device 200 so that a message 220 informing the reception of a message is displayed.

From FIG. 48, it can be seen that, when a message reception event is generated in the mobile terminal 100 in the state where a wireless network with the display device 200 has been set up, the mobile terminal 100 may control the display device 200 so that the shape of a cursor 210' is changed into the form of an envelope in order to inform the reception of a message.

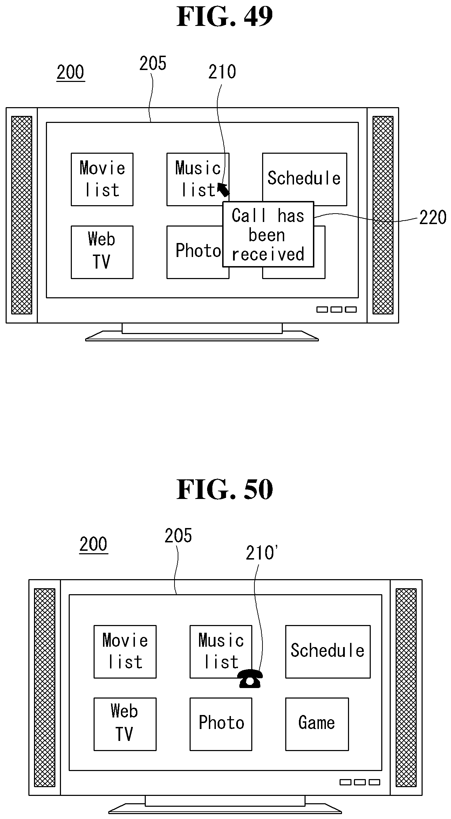

From FIG. 49, it can be seen that, when an incoming call event is generated in the mobile terminal 100 in the state where a wireless network with the display device 200 has been set up, the mobile terminal 100 may control the display device 200 so that a message 220 informing the reception of a call is displayed.

From FIG. 50, it can be seen that, when an incoming call event is generated in the mobile terminal 100 in the state where a wireless network with the display device 200 has been set up, the mobile terminal 100 may control the display device 200 so that the shape of a cursor 210' is changed into the form of an envelope in order to inform the reception of a call.

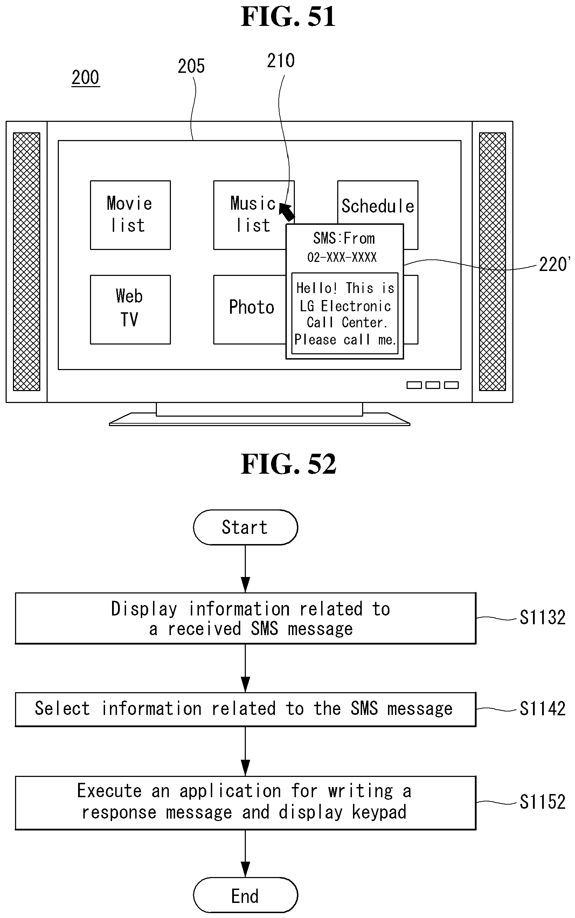

From FIG. 51, it can be seen that, when a message reception event is generated in the mobile terminal 100 in the state where a wireless network with the display device 200 has been set up, the mobile terminal 100 may control the display device 200 so that a received message 220' in itself is displayed.

Referring back to FIG. 46, in the state where the information related to the generated event has been displayed in the display device 200, when a user selects the displayed information related to the generated event using the cursor 210 at step S1140, the controller 180 controls the display device 200 so that an application corresponding to the generated event is executed at step S1150.

For example, if the generated event is a message reception event, the application corresponding to the generated event may be a message writing application. For another example, if the generated event is an incoming call event, the controller 180 of the mobile terminal 100 may control the display device 200 so that a telephone call performed in the mobile terminal 100 is interfaced.

FIG. 52 is a flowchart illustrating an example of the method of the mobile terminal 100 controlling the display device 200 shown in FIG. 46. The method of the mobile terminal 100 controlling the display device 200 is described below with reference to relevant drawings.

When an SMS message reception event is generated, information related to a received SMS message is displayed in the display device 200 under the control of the mobile terminal 100 at step S1132. Next, the information related to the received SMS message is selected by the cursor 210 at step S1142. When the information related to the received SMS message, the controller 180 of the mobile terminal 100 executes an application for writing a response message for the SMS message and controls the display device 200 so that a keypad for entering characters is displayed at step S1152.

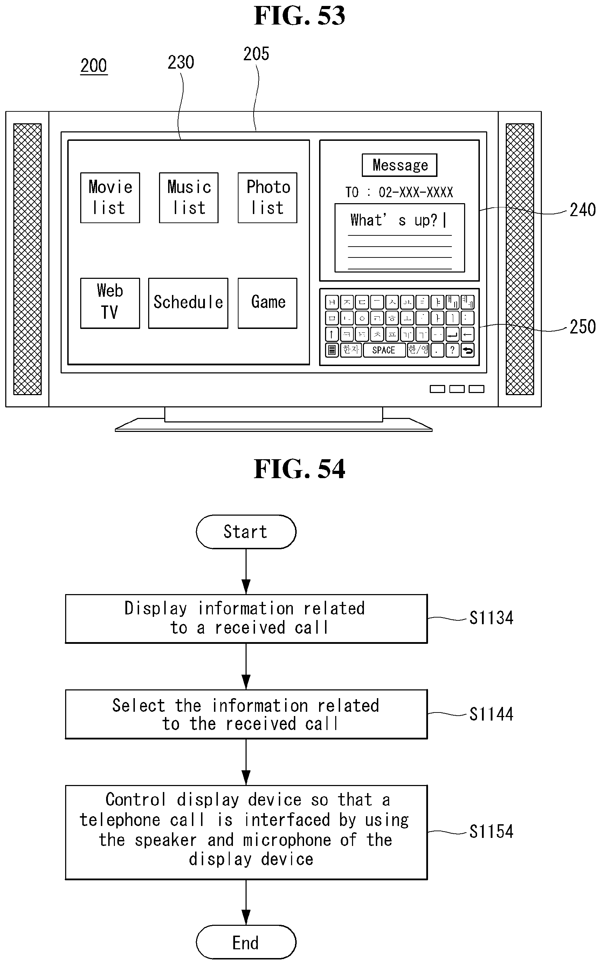

FIG. 53 shows a state where the execution screen 240 of a response message writing application and a keypad 250 have been displayed in the display device 200 according to the method of the mobile terminal 100 controlling the display device 200 shown in FIG. 52.

From FIG. 53, it can be seen that, when a user selects information related to a received SMS message, displayed in the display device 200, using the cursor 210, a region 230 including application icons, the execution screen 240 of a response message writing application, and the keypad 250 are displayed in the display device 200. Accordingly, the user may select characters included in the keypad 250 by using the cursor 210 and enter the selected character to the execution screen of the response message writing application.

For reference, the keypad for entering characters may also be displayed in the mobile terminal 100, unlike in FIG. 53. In this case, a user may enter characters to the execution screen of the response message writing application by using the keypad displayed in the mobile terminal 100.

FIG. 54 is a flowchart illustrating another example of the method of the mobile terminal 100 controlling the display device 200 shown in FIG. 46. The method of the mobile terminal 100 controlling the display device 200 is described below with reference to relevant drawings.

When an incoming call event is generated, information related to a received call is displayed in the display device 200 under the control of the mobile terminal 100 at step S1134. Next, the information related to the received call is selected by the cursor 210 at step S1144. When the information related to the received call is selected, the controller 180 of the mobile terminal 100 controls the display device 200 so that a telephone call performed in the mobile terminal 100 is interfaced at step S1154.

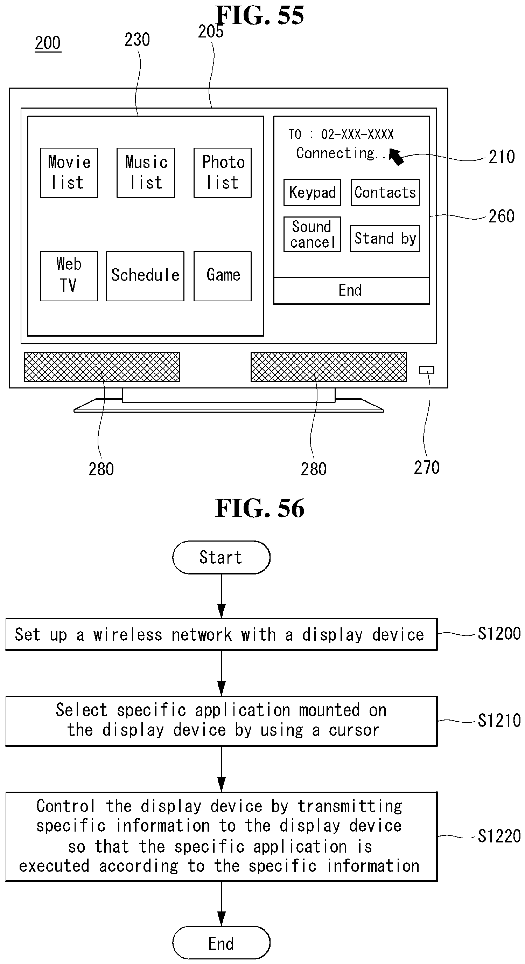

FIG. 55 shows a state where a telephone call is interfaced by the display device 200 according to the method of the mobile terminal 100 controlling the display device 200 shown in FIG. 54.

From FIG. 55, it can be seen that, when a user selects information related to a call, displayed in the display device 200, by using the cursor 210, a region 230, including application icons, and a telephone call-related information display region 260 are displayed in the display device 200. Here, the user may transfer his voice to a counterpart through a microphone 270 and hear a counterpart's voice through a speaker 280.

Furthermore, the user may perform various functions, related to the telephone call, by using the cursor 210. Here, the various functions related to the telephone call may include a keypad display function for entering characters, a contacts search function, a sound cancellation function, a standby function and so on, as shown in the telephone call-related information display region 260 of FIG. 55.

FIG. 56 is a flowchart illustrating a method of the mobile terminal 100 controlling the display device 200 according to still yet another embodiment of the present invention. A process of the method of the mobile terminal 100 controlling the display device 200 is described below with reference to relevant drawings.

When the remote control application is executed, the controller 180 of the mobile terminal 100 sets up a wireless network with the display device 200 at step S1200. Next, a user selects a specific application mounted on the display device 200 by using the cursor 210 at step S1210. Here, the selected application may be an application now being executed in the display device 200 or may be an application selected for execution.

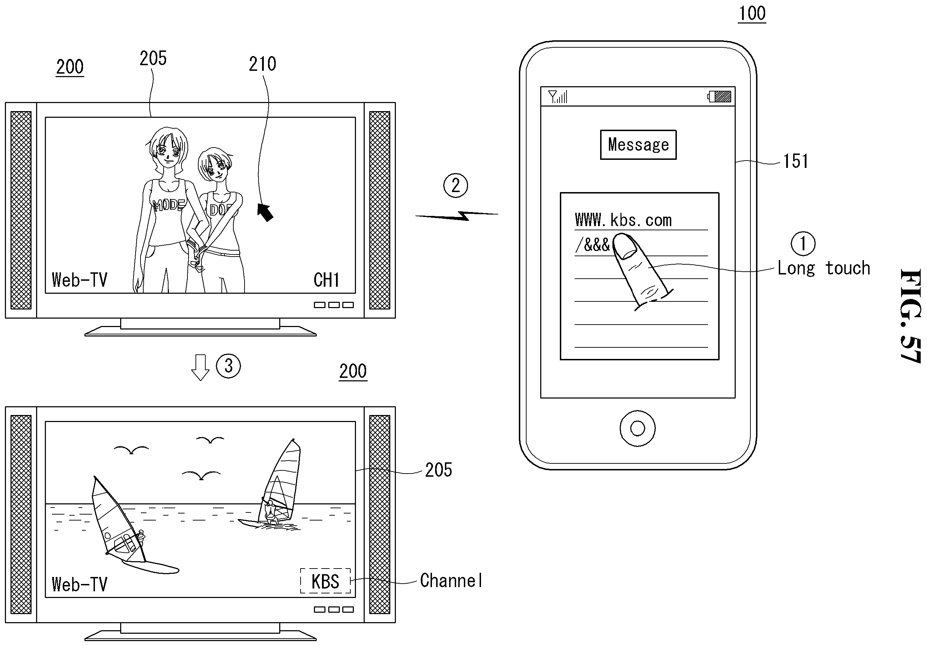

When the specific application is selected, the controller 180 of the mobile terminal 100 controls the display device 200 by transmitting specific information to the display device 200 so that the specific application is executed by applying the specific information to the specific application at step S1220. Examples where the specific information transmitted by the mobile terminal 100 is applied to the specific application selected in the display device 200 are described below with reference to FIGS. 57 to 59.

FIGs. 57 to 59 show examples where specific information transmitted by the mobile terminal 100 is applied to an application selected in the display device 200 according to the method of the mobile terminal 100 controlling the display device 200 shown in FIG. 56.

From FIG. 57, it can be seen that, when a user long touches the URL of a web TV channel, included in a messaged received by the mobile terminal 100, in the state where a wireless network with the display device 200 has been set up, the controller 180 of the mobile terminal 100 controls the display device 200 by transmitting the URL of the web TV channel to the display device 200 so that the channel of a web TV application being executed in the display device 200 is changed into the transmitted URL of the web TV channel.

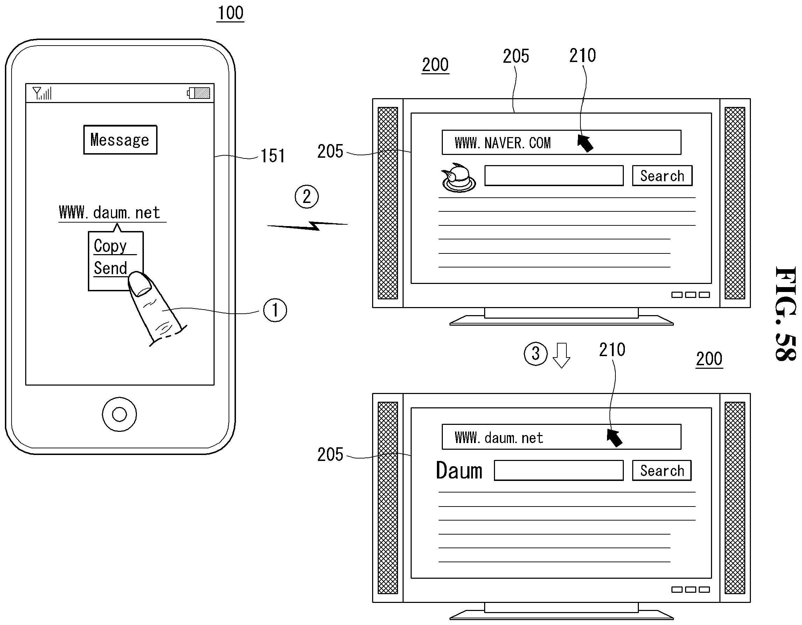

From FIG. 58, it can be seen that, in the state where a wireless network with the display device 200 has been set up and the cursor 210 has been placed in the address entry window of a web browsing application being executed in the display device 200, a user selects an address included in a message received by the mobile terminal 100 and touches a send button.

In response thereto, the controller 180 of the mobile terminal 100 controls the display device 200 by transmitting the selected address to the display device 200 so that the selected address is inputted to the address window of the web browsing application being executed in the display unit 151 and a web page corresponding to the selected address is accessed.

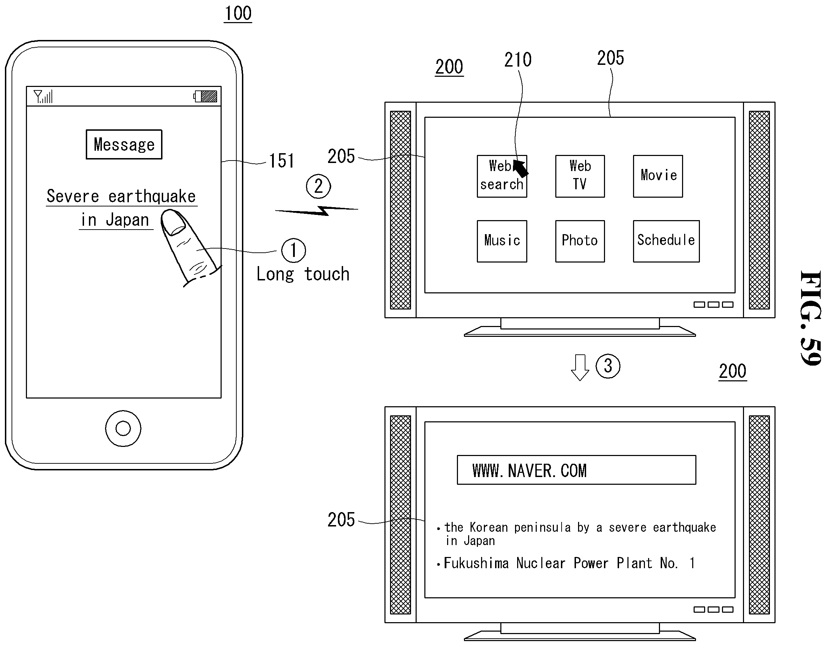

From FIG. 59, it can be seen that, in the state where a wireless network with the display device 200 has been set up and the cursor 210 has been placed in an icon indicating a web browsing application being executed in the display device 200, when a user long touches text included in a message received by the mobile terminal 100, the controller 180 of the mobile terminal 100 controls the display device 200 by transmitting the selected text to the display device 200 so that the web browsing application is executed according to the selected text.

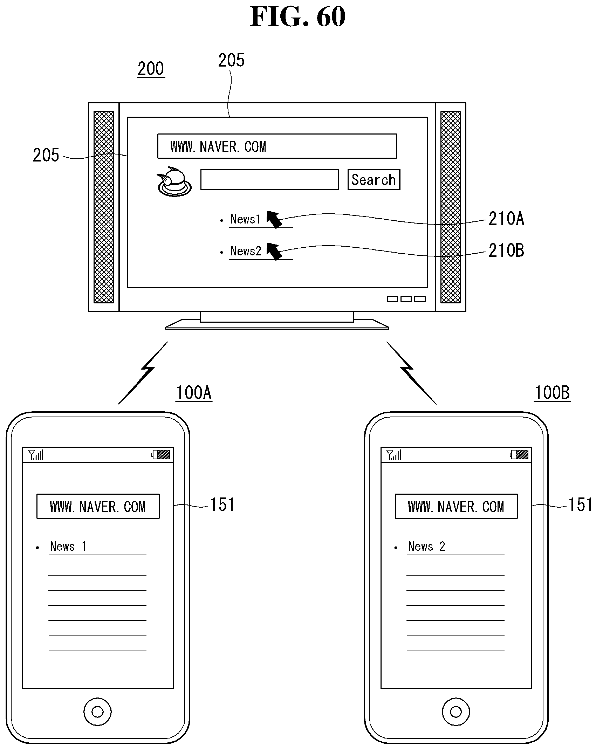

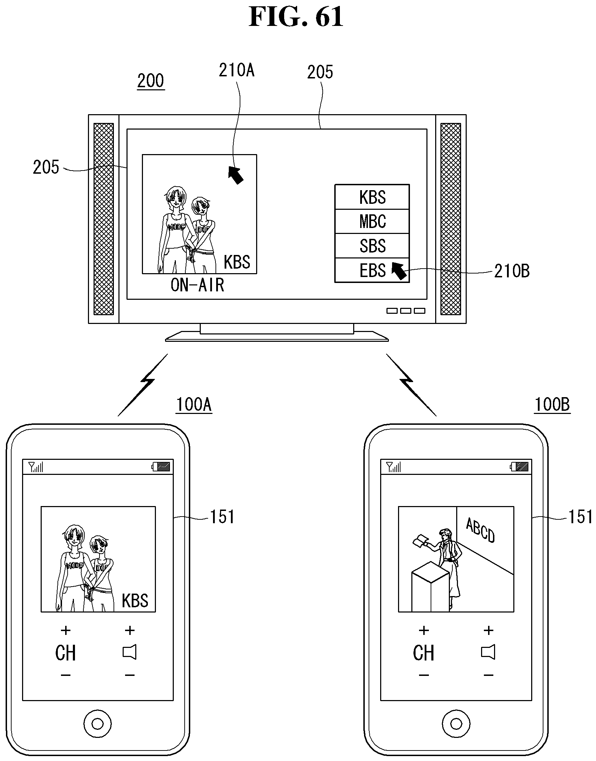

The method of transmitting and receiving information between the display device 200 and one mobile terminal 100 has been described above. The method of transmitting and receiving information described above, however, may also be applied to a method of transmitting and receiving information between the display device 200 and a plurality of the mobile terminals. Examples of this method are described below with reference to FIGS. 60 and 61.

FIG. 60 shows an example where information is transmitted from one display device 200 to a plurality of mobile terminals 100A and 100B. Referring to FIG. 60, a web browsing application is being executed in the display device 200, a cursor 210A corresponding to the first mobile terminal 100A is placed in first news, and a cursor 210B corresponding to the second mobile terminal 100B is placed in second news.

In this case, the first mobile terminal 100A may receive an URL corresponding to the first news, execute a web browsing application, and apply the received URL to the executed web browsing application so that the first news can be displayed in the display unit 151. Furthermore, the second mobile terminal 100B may receive an URL corresponding to the second news, execute a web browsing application, and apply the received URL to the executed web browsing application so that the second news can be displayed in the display unit 151.

FIG. 61 shows another example where information is transmitted from one display device 200 to a plurality of mobile terminals 100A and 100B. Referring to FIG. 61, a web TV application is being executed in the display device 200, a cursor 210A corresponding to the first mobile terminal 100A is placed in the screen of a channel "KBS" that is providing content, and a cursor 210B corresponding to the second mobile terminal 100B is placed in an icon indicating another channel "EBS".

In this case, the first mobile terminal 100A may receive an URL corresponding to the channel KBS", execute a web TV application, and apply the received URL to the executed web TV application so that the content provided by the channel "KBS" can be displayed in the display unit 151. Furthermore, the second mobile terminal 100B may receive an URL corresponding to the channel "EBS", execute a web TV application, and apply the received URL to the executed web TV application so that content provided by the channel "EBS" can be displayed in the display unit 151.

The above-described method of controlling display device may be written as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a carrier through a transmission medium or communication network. The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

## Claims

1. A mobile terminal (100) capable of setting up a wireless network with a display device (200), the mobile terminal comprising:
a display unit (151);
a wireless communication unit (110);
a controller (180) configured to:
control the wireless communication unit (110) to set up a wireless network with the display device (200) executing a specific application, when a control application is executed in the mobile terminal;
control the display device (200) to move a cursor (210) based on a user's manipulation of the mobile terminal (100);
select a specific region displayed in the display unit (151) by using the cursor (210);
control the display device (200) by transmitting specific information to the display device (200) such that the specific application is executed by applying the specific information to the specific application;
control the display device (200) to display an execution screen of the specific application having applied the specific information;
**characterized in that** the transmitted specific information is an URL of a web TV channel, wherein the specific application is a web TV application, and
wherein the displayed execution screen is a screen of the web TV application corresponding to the transmitted URL of the web TV channel.

2. The mobile terminal (100) as claimed in claim 1, wherein the controller is configured control the display unit (151) to display an execution screen of the control application,
wherein the execution screen of the control application comprises at least one button for control the display device (200).

3. The mobile terminal (100) as claimed in claim 1, wherein the controller is further configured to control the display device to select the execution screen of a first application being executed in the display device (200) by using the cursor (210).

4. A system comprising a display device (200) and a mobile terminal (100) as claimed in any one of the preceding claims, wherein the controller (180) is further configured to receive information about the first application from the display device (200), and execute, in the mobile terminal (100), a second application capable of performing the same function as the first application based on the information about the first application.

5. The system as claimed in claim 4, wherein the first application and the second application are a web TV application.

6. The system as claimed in claim 4, wherein the controller (180) is further configured to:
receive and store execution history of a first application being executed in the display device (200) via the wireless communication unit (110),
transmit the received execution history of the first application to an external device via the wireless communication unit (110),
receive update information about the first application and the execution history of the first application, via the wireless communication unit (110),
from the external device,
receive update information about content related to the execution history of the first application, via the wireless communication unit (110),
from the external device, and
display the update information about the content related to the execution history of the first application in at least one of the display device (200), and the display unit (151) of the mobile terminal (100).

7. The system as claimed in claim 6, wherein the information about the content related to the execution history of the first application is an information about an updated TV program.

8. The system as claimed in claim 7, wherein the external device is a web TV management server.

9. The system as claimed in claim 4, wherein the controller (180) is further configured to execute a predetermined specific application for transmitting the specific information to another electronic device

10. The system as claimed in claim 9, wherein the predetermined specific application comprises at least one of an SMS, an MMS message application, or an e-Mail application.

11. The system as claimed in claim 9, wherein the specific information is displayed in an entry box of the execution screen of the predetermined specific application.

12. A method for controlling a display device (200) by a mobile terminal (100), wherein the mobile terminal (100) comprises a display unit (151), a wireless communication unit (110), and a controller (180) configured to perform the steps of:
setting up, via a wireless communication unit (110), a wireless network with the display device (200) executing a specific application, when a control application is executed in the mobile terminal (100),
controlling the display device (200) to move a cursor (210) based on a user's manipulation of the mobile terminal (100);
selecting a specific region displayed in the display unit (151) by using the cursor (210);
transmitting, via a wireless communication unit (110), specific information to the display device (200) such that the specific application is executed by applying the specific information to the specific application in the display device (200),
controlling a display unit of the display device (200) to display an execution screen of the specific application having applied the specific information,
**characterized in that** the transmitted specific information is an URL of a web TV channel, wherein the specific application is a web TV application; and
wherein the displayed execution screen is a screen of the web TV application corresponding to the transmitted URL of the web TV channel.

13. The method as claimed in claim 12, further comprising:
controlling the display device to select the execution screen of a first application being executed in the display device by using the cursor (210); and
receiving information about the first application from the display device (200), and executing, in the mobile terminal (100), a second application capable of performing the same function as the first application based on the information about the first application.

14. The method as claimed in claim 12, further comprising:
receiving and storing execution history of a first application being executed in the display device (200) via the wireless communication unit (110),
transmitting the received execution history of the first application to an external device via the wireless communication unit (110),
receiving, via the wireless communication unit (110), update information about the first application and the execution history of the first application from the external device, and
receiving, via the wireless communication unit (110), update information about content related to the execution history of the first application from the external device, and
displaying the update information about the content related to the execution history of the first application in at least one of the display device (200), and the display unit (151) of the mobile terminal (100)
wherein the information about the content related to the execution history of the first application is an information about an updated TV program.

## Patentansprüche

1. Mobiles Endgerät (100), das ein drahtloses Netz mit einer Anzeigevorrichtung (200) einrichten kann, wobei das mobile Endgerät Folgendes umfasst:
eine Anzeigeeinheit (151);
eine drahtlose Kommunikationseinheit (110);
eine Steuereinheit (180), die konfiguriert ist,
die drahtlose Kommunikationseinheit (110) zu steuern, ein drahtloses Netz mit der Anzeigevorrichtung (200), die eine spezifische Anwendung ausführt, einzurichten, wenn eine Steueranwendung in dem mobilen Endgerät ausgeführt wird;
die Anzeigevorrichtung (200) zu steuern, einen Cursor (210) auf der Grundlage der Bedienung durch einen Anwender des mobilen Endgeräts (100) zu bewegen;
ein spezifisches Gebiet, das in der Anzeigeeinheit (151) angezeigt wird, durch Verwenden des Cursors (210) auszuwählen;
die Anzeigevorrichtung (200) durch Senden von spezifischen Informationen an die Anzeigevorrichtung (200) derart zu steuern, dass die spezifische Anwendung durch Anwenden der spezifischen Informationen auf die spezifische Anwendung ausgeführt wird;
die Anzeigevorrichtung (200) zu steuern, einen Ausführungsbildschirm der spezifischen Anwendung, die die spezifischen Informationen angewendet hat, anzuzeigen;
**dadurch gekennzeichnet, dass** die gesendeten spezifischen Informationen eine URL eines Web-TV-Kanals sind, wobei die spezifische Anwendung eine Web-TV-Anwendung ist, und
wobei der angezeigte Ausführungsbildschirm ein Bildschirm der Web-TV-Anwendung ist, die der gesendeten URL des Web-TV-Kanals entspricht.

2. Mobiles Endgerät (100) nach Anspruch 1, wobei die Steuereinheit konfiguriert ist, die Anzeigeeinheit (151) zu steuern, einen Ausführungsbildschirm der Steueranwendung anzuzeigen,
wobei der Ausführungsbildschirm der Steueranwendung mindestens eine Schaltfläche zum Steuern der Anzeigevorrichtung (200) umfasst.

3. Mobiles Endgerät (100) nach Anspruch 1, wobei die Steuereinheit ferner konfiguriert ist, die Anzeigevorrichtung zu steuern, den Ausführungsbildschirm einer ersten Anwendung, die in der Anzeigevorrichtung (200) ausgeführt wird, durch Verwenden des Cursors (210) auszuwählen.

4. System, das eine Anzeigevorrichtung (200) und ein mobiles Endgerät (100) nach einem der vorhergehenden Ansprüche umfasst, wobei die Steuereinheit (180) ferner konfiguriert ist, Informationen über die erste Anwendung von der Anzeigevorrichtung (200) zu empfangen und in dem mobilen Endgerät (100) eine zweite Anwendung auszuführen, die auf der Grundlage der Informationen über die erste Anwendung die gleiche Funktion wie die erste Anwendung durchführen kann.

5. System nach Anspruch 4, wobei die erste Anwendung und die zweite Anwendung eine Web-TV-Anwendung sind.

6. System nach Anspruch 4, wobei die Steuereinheit (180) ferner konfiguriert ist:
einen Ausführungsverlauf einer ersten Anwendung, die in der Anzeigevorrichtung (200) ausgeführt wird, über die drahtlose Kommunikationseinheit (110) zu empfangen und zu speichern,
den empfangenen Ausführungsverlauf der ersten Anwendung über die drahtlose Kommunikationseinheit (110) an eine externe Vorrichtung zu senden,
Aktualisierungsinformationen über die erste Anwendung und den Ausführungsverlauf der ersten Anwendung über die drahtlose Kommunikationseinheit (110) von der externen Vorrichtung zu empfangen,
Aktualisierungsinformationen über Inhalte, die sich auf den Ausführungsverlauf der ersten Anwendung beziehen, über die drahtlose Kommunikationseinheit (110) von der externen Vorrichtung zu empfangen, und
die Aktualisierungsinformationen über die Inhalte, die sich auf den Ausführungsverlauf der ersten Anwendung beziehen, in der Anzeigevorrichtung (200) und/oder der Anzeigeeinheit (151) des mobilen Endgeräts (100) anzuzeigen.

7. System nach Anspruch 6, wobei die Informationen über die Inhalte, die sich auf den Ausführungsverlauf der ersten Anwendung beziehen, Informationen über ein aktualisiertes TV-Programm sind.

8. System nach Anspruch 7, wobei die externe Vorrichtung ein Web-TV-Management-Server ist.

9. System nach Anspruch 4, wobei die Steuereinheit (180) ferner konfiguriert ist, eine vorgegebene spezifische Anwendung zum Senden der spezifischen Informationen an eine weitere elektronische Vorrichtung auszuführen.

10. System nach Anspruch 9, wobei die vorgegebene spezifische Anwendung eine SMS und/oder eine MMS-Nachrichtenanwendung und/oder eine E-Mail-Anwendung umfasst.

11. System nach Anspruch 9, wobei die spezifischen Informationen in einer Eingabebox des Ausführungsbildschirms der vorgegebenen spezifischen Anwendung angezeigt werden.

12. Verfahren zum Steuern einer Anzeigevorrichtung (200) durch ein mobiles Endgerät (100), wobei das mobile Endgerät (100) eine Anzeigeeinheit (151), eine drahtlose Kommunikationseinheit (110) und eine Steuereinheit (180) umfasst, das konfiguriert ist, die folgenden Schritte durchzuführen:
Einrichten eines drahtlosen Netzes mit der Anzeigevorrichtung (200), die eine spezifische Anwendung ausführt, über eine drahtlose Kommunikationseinheit (110), wenn eine Steueranwendung in dem mobilen Endgerät ausgeführt wird (100),
Steuern der Anzeigevorrichtung (200), einen Cursor (210) auf der Grundlage der Bedienung durch einen Anwender des mobilen Endgeräts (100) zu bewegen;
Auswählen eines spezifischen Gebiets, das in der Anzeigeeinheit (151) angezeigt wird, durch Verwenden des Cursors (210);
Senden von spezifischen Informationen über eine drahtlose Kommunikationseinheit (110) an die Anzeigevorrichtung (200) derart, dass die spezifische Anwendung durch Anwenden der spezifischen Informationen auf die spezifische Anwendung in der Anzeigevorrichtung (200) ausgeführt wird;
Steuern einer Anzeigeeinheit der Anzeigevorrichtung (200), einen Ausführungsbildschirm der spezifischen Anwendung, die die spezifischen Informationen angewendet hat, anzuzeigen,
**dadurch gekennzeichnet, dass** die gesendeten spezifischen Informationen eine URL eines Web-TV-Kanals sind, wobei die spezifische Anwendung eine Web-TV-Anwendung ist, und
wobei der angezeigte Ausführungsbildschirm ein Bildschirm der Web-TV-Anwendung ist, die der gesendeten URL des Web-TV-Kanals entspricht.

13. Verfahren nach Anspruch 12, das ferner Folgendes umfasst:
Steuern der Anzeigevorrichtung, den Ausführungsbildschirm einer ersten Anwendung, die in der Anzeigevorrichtung ausgeführt wird, durch Verwenden des Cursors (210) auszuwählen, und
Empfangen von Informationen über die erste Anwendung von der Anzeigevorrichtung (200) und Ausführen einer zweiten Anwendung, die auf der Grundlage der Informationen über die erste Anwendung die gleiche Funktion wie die erste Anwendung durchführen kann, in dem mobilen Endgerät (100).

14. Verfahren nach Anspruch 12, das ferner Folgendes umfasst:
Empfangen und Speichern eines Ausführungsverlaufs einer ersten Anwendung, die in der Anzeigevorrichtung (200) ausgeführt wird, über die drahtlose Kommunikationseinheit (110),
Senden des empfangenen Ausführungsverlaufs der ersten Anwendung über die drahtlose Kommunikationseinheit (110) an eine externe Vorrichtung,
Empfangen von Aktualisierungsinformationen über die erste Anwendung und den Ausführungsverlauf der ersten Anwendung über die drahtlose Kommunikationseinheit (110) von der externen Vorrichtung und
Empfangen von Aktualisierungsinformationen über Inhalte, die sich auf den Ausführungsverlauf der ersten Anwendung beziehen, über die drahtlose Kommunikationseinheit (110) von der externen Vorrichtung und
Anzeigen der Aktualisierungsinformationen über die Inhalte, die sich auf den Ausführungsverlauf der ersten Anwendung beziehen, in der Anzeigevorrichtung (200) und/oder der Anzeigeeinheit (151) des mobilen Endgeräts (100),
wobei die Informationen über die Inhalte, die sich auf den Ausführungsverlauf der ersten Anwendung beziehen, Informationen über ein aktualisiertes TV-Programm sind.

## Revendications

1. Terminal mobile (100) capable de paramétrer un réseau sans fil avec un dispositif d'affichage (200), le terminal mobile comportant :
une unité d'affichage (151) ;
une unité de communication sans fil (110) ;
une commande (180) configurée pour :
commander à l'unité de communication sans fil (110) de paramétrer un réseau sans fil avec le dispositif d'affichage (200) exécutant une application spécifique, lorsqu'une application de commande est exécutée dans le terminal mobile ;
commander au dispositif d'affichage (200) de déplacer un curseur (210) sur la base d'une manipulation de l'utilisateur du terminal mobile (100) ;
sélectionner une zone spécifique affichée dans l'unité d'affichage (151) en utilisant le curseur (210) ;
commander le dispositif d'affichage (200) en transmettant des informations spécifiques au dispositif d'affichage (200) de telle sorte que l'application spécifique est exécutée en appliquant les informations spécifiques à l'application spécifique ;
commander au dispositif d'affichage (200) d'afficher un écran d'exécution de l'application spécifique ayant appliqué les informations spécifiques ;
**caractérisé en ce que** les informations spécifiques transmises sont une adresse universelle, URL, d'une chaîne de télévision en ligne, dans lequel l'application spécifique est une application de télévision en ligne, et
dans lequel l'écran d'exécution affiché est un écran de l'application de télévision en ligne correspondant à l'URL transmise de la chaîne de télévision en ligne.

2. Terminal mobile (100) selon la revendication 1, dans lequel la commande est configurée pour commander à l'unité d'affichage (151) d'afficher un écran d'exécution de l'application de commande,
dans lequel l'écran d'exécution de l'application de commande comporte au moins un bouton pour commander le dispositif d'affichage (200).

3. Terminal mobile (100) selon la revendication 1, dans lequel la commande est en outre configurée pour commander au dispositif d'affichage de sélectionner l'écran d'exécution d'une première application en cours d'exécution dans le dispositif d'affichage (200) en utilisant le curseur (210).

4. Système comportant un dispositif d'affichage (200) et un terminal mobile (100) selon l'une quelconque des revendications précédentes, dans lequel la commande (180) est en outre configurée pour recevoir des informations concernant la première application provenant du dispositif d'affichage (200), et exécuter, dans le terminal mobile (100), une seconde application capable de remplir la même fonction que la première application sur la base des informations concernant la première application.

5. Système selon la revendication 4, dans lequel la première application et la seconde application sont une application de télévision en ligne.

6. Système selon la revendication 4, dans lequel la commande (180) est en outre configurée pour :
recevoir et stocker un historique d'exécution d'une première application en cours d'exécution dans le dispositif d'affichage (200) via l'unité de communication sans fil (110),
transmettre l'historique d'exécution reçu de la première application à un dispositif externe via l'unité de communication sans fil (110),
recevoir des informations de mise à jour concernant la première application et l'historique d'exécution de la première application, via l'unité de communication sans fil (110), provenant du dispositif externe,
recevoir des informations de mise à jour concernant un contenu associé à l'historique d'exécution de la première application, via l'unité de communication sans fil (110), provenant du dispositif externe, et
afficher les informations de mise à jour concernant le contenu associé à l'historique d'exécution de la première application, dans au moins un élément parmi le dispositif d'affichage (200) et l'unité d'affichage (151) du terminal mobile (100).

7. Système selon la revendication 6, dans lequel les informations concernant le contenu associé à l'historique d'exécution de la première application sont des informations concernant un programme de télévision mis à jour.

8. Système selon la revendication 7, dans lequel le dispositif externe est un serveur de gestion de télévision en ligne.

9. Système selon la revendication 4, dans lequel la commande (180) est en outre configurée pour exécuter une application spécifique prédéterminée pour transmettre les informations spécifiques à un autre dispositif électronique.

10. Système selon la revendication 9, dans lequel l'application spécifique prédéterminée comporte au moins un élément parmi un SMS, une application de messagerie multimédia ou une application de courrier électronique.

11. Système selon la revendication 9, dans lequel les informations spécifiques sont affichées dans une boîte de saisie de l'écran d'exécution de l'application spécifique prédéterminée.

12. Procédé pour commander un dispositif d'affichage (200) par un terminal mobile (100), dans lequel le terminal mobile (100) comporte une unité d'affichage (151), une unité de communication sans fil (110) et une commande (180) configurée pour exécuter les étapes consistant à :
paramétrer, via une unité de communication sans fil (110), un réseau sans fil avec le dispositif d'affichage (200) exécutant une application spécifique, lorsqu'une application de commande est exécutée dans le terminal mobile (100),
commander au dispositif d'affichage (200) de déplacer un curseur (210) sur la base d'une manipulation de l'utilisateur du terminal mobile (100) ;
sélectionner une zone spécifique affichée dans l'unité d'affichage (151) en utilisant le curseur (210) ;
transmettre, via une unité de communication sans fil (110), des informations spécifiques au dispositif d'affichage (200) de telle sorte que l'application spécifique est exécutée en appliquant les informations spécifiques à l'application spécifique dans le dispositif d'affichage (200),
commander à une unité d'affichage du dispositif d'affichage (200) d'afficher un écran d'exécution de l'application spécifique ayant appliqué les informations spécifiques,
**caractérisé en ce que** les informations spécifiques transmises sont une adresse universelle, URL, d'une chaîne de télévision en ligne, dans lequel l'application spécifique est une application de télévision en ligne ; et
dans lequel l'écran d'exécution affiché est un écran de l'application de télévision en ligne correspondant à l'URL transmise de la chaîne de télévision en ligne.

13. Procédé selon la revendication 12, comportant en outre les étapes consistant à :
commander au dispositif d'affichage de sélectionner l'écran d'exécution d'une première application en cours d'exécution dans le dispositif d'affichage en utilisant le curseur (210) ; et
recevoir des informations concernant la première application provenant du dispositif d'affichage (200), et exécuter, dans le terminal mobile (100), une seconde application capable de remplir la même fonction que la première application sur la base des informations concernant la première application.

14. Procédé selon la revendication 12, comportant en outre les étapes consistant à :
recevoir et stocker un historique d'exécution d'une première application en cours d'exécution dans le dispositif d'affichage (200) via l'unité de communication sans fil (110),
transmettre l'historique d'exécution reçu de la première application à un dispositif externe via l'unité de communication sans fil (110),
recevoir, via l'unité de communication sans fil (110), des informations de mise à jour concernant la première application et l'historique d'exécution de la première application provenant du dispositif externe, et
recevoir, via l'unité de communication sans fil (110), des informations de mise à jour concernant un contenu associé à l'historique d'exécution de la première application provenant du dispositif externe, et
afficher les informations de mise à jour concernant le contenu associé à l'historique d'exécution de la première application dans au moins un élément parmi le dispositif d'affichage (200) et l'unité d'affichage (151) du terminal mobile (100)
dans lequel les informations concernant le contenu associé à l'historique d'exécution de la première application sont des informations concernant un programme de télévision mis à jour.
